# EUROPEAN PATENT SPECIFICATION

(11) **EP 4 165 143 B1**
(45) Date of publication and mention of the grant of the patent: **25.10.2023**
(21) Application number: 21730903.8
(22) Date of filing: 04.06.2021
(51) Int. Cl.: C09K 11/80, G03B 21/20, G03B 21/16

(54) **EMBEDDED PHOSPHOR CERAMIC TILE**
EINGEBETTETE LEUCHTSTOFF-KERAMIKKACHEL
CARREAU EN CÉRAMIQUE À LUMINOPHORE INTÉGRÉ

(30) Priority: 16.06.2020 EP 20180130
(43) Date of publication of application: 19.04.2023
(73) Proprietor: Signify Holding B.V., 5656 AE Eindhoven (NL)
(72) Inventor: HIKMET, Rifat, Ata, Mustafa, 5656 AE Eindhoven (NL); VAN BOMMEL, Ties, 5656 AE Eindhoven (NL)
(74) Representative: Verweij, Petronella Daniëlle
(86) International application number: PCT/EP2021/064989
(87) International publication number: WO 2021/254794

(56) References cited:
- US-A1- 2017 092 786
- US-A1- 2018 275 496
- US-A1- 2019 086 778

## Description

### FIELD OF THE INVENTION

The invention relates to an assembly comprising a luminescent body and to a method for producing such assembly. Further, the invention relates to a luminaire or a lamp comprising such assembly.

### BACKGROUND OF THE INVENTION

Ceramic wavelength-conversion plates and light sources including the same are known in the art. US2013/0250544, for instance, describes a wavelength-conversion plate, comprising a converter, said converter comprising a first ceramic material capable of converting incident primary light to secondary light; a reflector coupled to said converter, said reflector comprising a second ceramic material capable of reflecting secondary light emitted by said converter; and an interface between said converter and said reflector, wherein said second ceramic material abuts said first ceramic material over at least about 50% of said interface. A further publication disclosing similar conversion plates is US2018275496 A1.

### SUMMARY OF THE INVENTION

While white LED sources can give an intensity of e.g. up to about 300 lm/mm²; static phosphor converted laser white sources can give an intensity even up to about 20.000 lm/mm². Ce doped garnets (e.g. YAG, LuAG) may be the most suitable luminescent convertors which can be used for pumping with blue laser light as the garnet matrix has a very high chemical stability. Further, at low Ce concentrations (e.g. below 0.5%) temperature quenching may only occur above about 200 °C. Furthermore, emission from Ce has a very fast decay time so that optical saturation can essentially be avoided. Assuming e.g. a reflective mode operation, blue laser light may be incident on a phosphor. This may in embodiments realize almost full conversion of blue light, leading to emission of converted light. It is for this reason that the use of garnet phosphors with relatively high stability and thermal conductivity is suggested. However, also other phosphors may be applied. Heat management may remain an issue when extremely high-power densities are used.

High brightness light sources can be used in applications such as projection, stage-lighting, spot-lighting and automotive lighting. For this purpose, laser-phosphor technology can be used wherein a laser provides laser light and a remote phosphor converts laser light into converted light. The phosphor may in embodiments be arranged on or inserted in a heatsink for improved thermal management and thus higher brightness. Silicone adhesive is often used to provide good thermal contact between the heat sink and the ceramic phosphor. However, at high intensities silicone may degrade. In specific embodiments, a ceramic phosphor may be used with various layers, such as an aluminum layer or silver layer, for obtaining high reflectivity. However, aluminum and silver layers appear to be not easily solderable. Hence, in embodiments other layers, such as nickel layers, may be deposited in order to make the ceramic solderable to a for example a copper heat sink. Making solderable multi layers on top of the ceramic phosphor appears to be costly and the thermal conductivity of a solder layer (around 60W/mK) and a copper layer (400W/mK) may lead to an extra thermal resistance with it.

Hence, it is an aspect of the invention to provide an alternative light generating device, which preferably further at least partly obviates one or more of above-described drawbacks. The present invention may have as object to overcome or ameliorate at least one of the disadvantages of the prior art, or to provide a useful alternative.

In a first aspect, the invention provides an assembly comprising a luminescent body, a thermally conductive element, and optionally a coating layer. The luminescent body comprises a luminescent material. Especially, the luminescent body comprises a ceramic luminescent body. Further, the luminescent body comprises an external surface. Especially, the thermally conductive element comprises metal material. Further, in specific embodiments at least 25% of the external surface is in thermal contact with the thermally conductive element. In yet further specific embodiments, the (optional) coating layer may be configured between the luminescent body and the thermally conductive element. Hence, especially the invention provides in embodiments an assembly comprising a luminescent body, a thermally conductive element, and a coating layer, wherein: (a) the luminescent body comprises a luminescent material, wherein the luminescent body comprises a ceramic luminescent body, and wherein the luminescent body comprises an external surface; (b) the thermally conductive element comprises metal material; (c) at least 25% of the external surface is in thermal contact with the thermally conductive element; and (d) the coating layer is configured between the luminescent body and the thermally conductive element. Especially, the thermally conductive element comprises supersonic particle deposited metal material.

In this way, an assembly of a luminescent body and a thermally conductive material may be provided which may allow a good thermal dissipation, due to the good thermal contact between the luminescent body and the thermally conductive material. Further, in this way in a relatively easy way a coating and a thermally conductive element may be provided. Instead of matching the thermally conductive element to the dimensions of the luminescent body, the thermally conductive element may be created around at least part of the luminescent body. This may allow a conformal shape, which may not be fully possible when a thermally conductive element, such as a heatsink, is brought in physical contact with the luminescent body. Yet further, the present assembly may allow high intensity radiation and thus also a high intensity emission.

As indicated above, the assembly comprises a luminescent body and a thermally conductive element, and optionally a coating layer.

The luminescent body especially comprises a luminescent material. The term "luminescent material" herein especially relates to inorganic luminescent materials, which are also sometimes indicated as phosphors. These terms are known to the person skilled in the art.

In embodiments, quantum dots and/or organic dyes may be applied, and may optionally be embedded in transmissive matrices like e.g. polymers, like PMMA, or polysiloxanes, etc. etc. Quantum dots are small crystals of semiconducting material generally having a width or diameter of only a few nanometers. When excited by incident light, a quantum dot emits light of a color determined by the size and material of the crystal. Light of a particular color can therefore be produced by adapting the size of the dots. Most known quantum dots with emission in the visible range are based on cadmium selenide (CdSe) with a shell such as cadmium sulfide (CdS) and zinc sulfide (ZnS). Cadmium free quantum dots such as indium phosphide (InP), and copper indium sulfide (CuInS₂) and/or silver indium sulfide (AgInS₂) can also be used. Quantum dots show very narrow emission band and thus they show saturated colors. Furthermore, the emission color can easily be tuned by adapting the size of the quantum dots. Any type of quantum dot known in the art may be used in the present invention. However, it may be preferred for reasons of environmental safety and concern to use cadmium-free quantum dots or at least quantum dots having a very low cadmium content. Instead of quantum dots or in addition to quantum dots, also other quantum confinement structures may be used. The term "quantum confinement structures" should, in the context of the present application, be understood as e.g. quantum wells, quantum dots, quantum rods, tripods, tetrapods, or nano-wires, etcetera. Organic phosphors can be used as well. Examples of suitable organic phosphor materials are organic luminescent materials based on perylene derivatives, for example compounds sold under the name Lumogen^{®} by BASF. Examples of suitable compounds include, but are not limited to, Lumogen^{®} Red F305, Lumogen^{®} Orange F240, Lumogen^{®} Yellow F083, and Lumogen^{®} F170. Quantum confinement structures may thus also be converter elements. The organic luminescent materials, such as afore-mentioned dyes, or more especially specific (functional) groups thereof, may thus also be converter elements. Elements like (trivalent) Ce and divalent Eu are in the art also indicates as activators or activator elements or "dopants". Hence, especially the luminescent material is or comprises a converter element.

As indicated above, the light generating device especially further comprises a luminescent material configured to convert at least part of the light source light into luminescent material light having an emission band having wavelengths in one or more of (a) the green spectral wavelength range and (b) the yellow spectral wavelength range.

The term "luminescent material" especially refers to a material that can convert first radiation, especially (one or more of UV radiation and) blue radiation, into second radiation. In general, the first radiation and second radiation have different spectral power distributions. Hence, instead of the term "luminescent material", also the terms "luminescent converter" or "converter" may be applied. In general, the second radiation has a spectral power distribution at larger wavelengths than the first radiation, which is the case in the so-called down-conversion. In specific embodiments, however the second radiation has a spectral power distribution with intensity at smaller wavelengths than the first radiation, which is the case in the so-called up-conversion. In embodiments, the "luminescent material" may especially refer to a material that can convert radiation into e.g. visible and/or infrared light. For instance, in embodiments the luminescent material may be able to convert one or more of UV radiation and blue radiation, into visible light. The luminescent material may in specific embodiments also convert radiation into infrared radiation (IR). Hence, upon excitation with radiation, the luminescent material emits radiation. In general, the luminescent material will be a down converter, i.e. radiation of a smaller wavelength is converted into radiation with a larger wavelength (λₑₓ<λₑₘ), though in specific embodiments the luminescent material may comprise down-converter luminescent material, i.e. radiation of a larger wavelength is converted into radiation with a smaller wavelength (λₑₓ>λₑₘ). In embodiments, the term "luminescence" may refer to phosphorescence. In embodiments, the term "luminescence" may also refer to fluorescence. Instead of the term "luminescence", also the term "emission" may be applied. Hence, the terms "first radiation" and "second radiation" may refer to excitation radiation and emission (radiation), respectively. Likewise, the term "luminescent material" may in embodiments refer to phosphorescence and/or fluorescence. The term "luminescent material" may also refer to a plurality of different luminescent materials. The term "luminescent material" herein may also refer to a material comprising a luminescent material, such as a light transmissive host comprising the luminescent material.

Especially, the luminescent material is configured to convert at least part of the light source light into luminescent material light having an emission band having wavelengths in one or more of (a) the green spectral wavelength range and (b) the yellow spectral wavelength range, wherein the luminescent material comprises a (garnet) luminescent material of the type A₃BsO₁₂:Ce, wherein A comprises one or more of Y, La, Gd, Tb and Lu, and wherein B comprises one or more of Al, Ga, In and Sc. Hence, the luminescent material light may e.g. green light or yellow light (or in specific embodiments even orange (dependent upon the composition of the garnet and cerium concentration)). However, other embodiments are also possible, see below. In embodiments, 0.05-10% of the A elements comprise Ce, even more especially 0.05-5%, such as 0.1-5%. Especially, embodiments, 0.1-3% of the A elements comprise Ce, such as up to 2%, like selected from the range of 0.1-1.5%, such as at least above 0.5%.

Especially, a luminescent material comprises conversion material or is a conversion material. A luminescent material converts light from a light source, such as the light source light, into secondary light (here the luminescent material light). The luminescent material may comprise an organic group that converts the light, or a molecule that converts the light, or an inorganic group that converts the light, etc. Such groups (or molecule) may be indicated as converter element. The garnet type material as indicated above, comprises cerium (Ce) as converter element. Cerium comprising garnets are well known in the art.

Hence, in specific embodiments the luminescent material comprises a luminescent material of the type A₃BsO₁₂:Ce, wherein A in embodiments comprises one or more of Y, La, Gd, Tb and Lu, especially (at least) one or more of Y, Gd, Tb and Lu, and wherein B in embodiments comprises one or more of Al, Ga, In and Sc. Especially, A may comprise one or more of Y, Gd and Lu, such as especially one or more of Y and Lu. Especially, B may comprise one or more of Al and Ga, more especially at least Al, such as essentially entirely Al. Hence, especially suitable luminescent materials are cerium comprising garnet materials. Embodiments of garnets especially include A₃B₅O₁₂ garnets, wherein A comprises at least yttrium or lutetium and wherein B comprises at least aluminum. Such garnets may be doped with cerium (Ce), with praseodymium (Pr) or a combination of cerium and praseodymium; especially however with Ce. Especially, B comprises aluminum (Al), however, B may also partly comprise gallium (Ga) and/or scandium (Sc) and/or indium (In), especially up to about 20% of Al, more especially up to about 10 % of Al (i.e. the B ions essentially consist of 90 or more mole % of Al and 10 or less mole % of one or more of Ga, Sc and In); B may especially comprise up to about 10% gallium. In another variant, B and O may at least partly be replaced by Si and N. The element A may especially be selected from the group consisting of yttrium (Y), gadolinium (Gd), terbium (Tb) and lutetium (Lu). Further, Gd and/or Tb are especially only present up to an amount of about 20% of A. In a specific embodiment, the garnet luminescent material comprises (Y₁₋ₓLuₓ)₃B₅O₁₂:Ce, wherein x is equal to or larger than 0 and equal to or smaller than 1. The term ":Ce", indicates that part of the metal ions (i.e. in the garnets: part of the "A" ions) in the luminescent material is replaced by Ce. For instance, in the case of (Y₁₋ₓLuₓ)₃Al₅O₁₂:Ce, part of Y and/or Lu is replaced by Ce. This is known to the person skilled in the art. Ce will replace A in general for not more than 10%; in general, the Ce concentration will be in the range of 0.1 to 4%, especially 0.1 to 2% (relative to A). Assuming 1% Ce and 10% Y, the full correct formula could be (Y_{0.1}Lu_{0.89}Ce_{0.01})₃Al₅O₁₂. Ce in garnets is substantially or only in the trivalent state, as is known to the person skilled in the art.

In embodiments, the luminescent material (thus) comprises A₃B₅O₁₂ wherein in specific embodiments at maximum 10% of B-O may be replaced by Si-N.

In specific embodiments the luminescent material comprises (Yₓ₁₋ₓ₂₋ₓ₃A'ₓ₂Ceₓ₃)₃(Al_{y1-y2}B'_{y2})₅O₁₂, wherein x1+x2+x3=1, wherein x3>0, wherein 0<x2+x3≤0.2, wherein y1+y2=1, wherein 0≤y2≤0.2, wherein A' comprises one or more elements selected from the group consisting of lanthanides, and wherein B' comprises one or more elements selected from the group consisting of Ga, In and Sc. In embodiments, x3 is selected from the range of 0.001-0.1. In the present invention, especially x1>0, such as >0.2, like at least 0.8. Garnets with Y may provide suitable spectral power distributions.

In specific embodiments at maximum 10% of B-O may be replaced by Si-N. Here, B in B-O refers to one or more of Al, Ga, In and Sc (and O refers to oxygen); in specific embodiments B-O may refer to Al-O. As indicated above, in specific embodiments x3 may be selected from the range of 0.001-0.04. Especially, such luminescent materials may have a suitable spectral distribution (see however below), have a relatively high efficiency, have a relatively high thermal stability, and allow a high CRI (in combination with the light source light and the second light source light (and the optical filter)). Hence, in specific embodiments A may be selected from the group consisting of Lu and Gd. Alternatively or additionally, B may comprise Ga. Hence, in embodiments the luminescent material comprises (Yₓ₁₋ₓ₂₋ₓ₃(Lu,Gd)ₓ₂Ceₓ₃)₃(Al_{y1-y2}Ga_{y2})₅O₁₂, wherein Lu and/or Gd may be available. Even more especially, x3 is selected from the range of 0.001-0.1, wherein 0<x2+x3≤0.1, and wherein 0≤y2≤0.1. Further, in specific embodiments, at maximum 1% of B-O may be replaced by Si-N. Here, the percentage refers to moles (as known in the art); see e.g. also EP3149108. In yet further specific embodiments, the luminescent material comprises (Yₓ₁₋ₓ₃Ceₓ₃)₃Al₅O₁₂, wherein x1+x3=1, and wherein 0<x3≤0.2, such as 0.001-0.1.

In specific embodiments, the light generating device may only include luminescent materials selected from the type of cerium comprising garnets. In even further specific embodiments, the light generating device includes a single type of luminescent materials, such as (Yₓ₁₋ₓ₂₋ₓ₃A'ₓ₂Ceₓ₃)₃(Al_{y1-y2}B'_{y2})₅O₁₂. Hence, in specific embodiments the light generating device comprises luminescent material, wherein at least 85 weight%, even more especially at least about 90 wt.%, such as yet even more especially at least about 95 weight % of the luminescent material comprises (Yₓ₁₋ₓ₂₋ₓ₃A'ₓ₂Ceₓ₃)₃(Al_{y1-y2}B'_{y2})₅O₁₂. Here, wherein A' comprises one or more elements selected from the group consisting of lanthanides, and wherein B' comprises one or more elements selected from the group consisting of Ga In and Sc, wherein x1+x2+x3=1, wherein x3>0, wherein 0<x2+x3≤0.2, wherein y1+y2=1, wherein 0≤y2≤0.2. Especially, x3 is selected from the range of 0.001-0.1. Note that in embodiments x2=0. Alternatively or additionally, in embodiments y2=0.

In specific embodiments, A may especially comprise at least Y, and B may especially comprise at least Al.

The garnet type luminescent material may also described with an alternative formula A₃B'₂C"₃O₁₂. Here, A may comprise one or more of (i) rare earth ions, such as one or more selected from Y³⁺, Lu³⁺, Gd³⁺, Tb³⁺, La³⁺, and (ii) divalent cations, such as Ca²⁺. Here, B may comprise one or more of (i) trivalent cations, such as one or more of Al³⁺, Ga³⁺, Sc³⁺, Sb³⁺, and In³⁺, and (ii) divalent cations, such as one or more of Mg²⁺ and Mn²⁺. Here, C may comprise one or more of (i) trivalent cations, such as one or more of Ga³⁺ and Al³⁺, (ii) divalent cations, such as Mn²⁺, and (iii) tetravalent cations, such as one or more of Si⁴⁺ and Ge⁴⁺. With such ions, the garnet crystal structure can be maintained. Other substitutions than mentioned may also be possible.

Alternatively or additionally, the luminescent material may e.g. be M₂Si₅N₈:Eu²⁺ and/or MA1SiN₃:Eu²⁺ and/or Ca₂AlSi₃O₂N₅:Eu²⁺, etc., wherein M comprises one or more of Ba, Sr and Ca, especially in embodiments at least Sr. In specific embodiments, the first luminescent may comprise one or more materials selected from the group consisting of (Ba,Sr,Ca)S:Eu, (Ba,Sr,Ca)AlSiN₃:Eu and (Ba,Sr,Ca)₂Si₅N₈:Eu. In these compounds, europium (Eu) is substantially or only divalent, and replaces one or more of the indicated divalent cations. In general, Eu will not be present in amounts larger than 10% of the cation; its presence will especially be in the range of about 0.5 to 10%, more especially in the range of about 0.5 to 5% relative to the cation(s) it replaces. The term ":Eu", indicates that part of the metal ions is replaced by Eu (in these examples by Eu²⁺). For instance, assuming 2% Eu in CaAlSiN3:Eu, the correct formula could be (Ca_{0.98}Eu_{0.02})AlSiN₃. Divalent europium will in general replace divalent cations, such as the above divalent alkaline earth cations, especially Ca, Sr, or Ba. The material (Ba,Sr,Ca)S:Eu can also be indicated as MS:Eu, wherein M is one or more elements selected from the group consisting of barium (Ba), strontium (Sr) and calcium (Ca); especially, M comprises in this compound calcium or strontium, or calcium and strontium, more especially calcium. Here, Eu is introduced and replaces at least part of M (i.e. one or more of Ba, Sr, and Ca). Further, the material (Ba,Sr,Ca)₂Si₅N₈:Eu can also be indicated as M₂Si₅N₈:Eu, wherein M is one or more elements selected from the group consisting of barium (Ba), strontium (Sr) and calcium (Ca); especially, M comprises in this compound Sr and/or Ba. In a further specific embodiment, M consists of Sr and/or Ba (not taking into account the presence of Eu), especially 50 to 100%, more especially 50 to 90% Ba and 50 to 0%, especially 50 to 10% Sr, such as Ba_{1.5}Sr_{0.5}Si₅N₈:Eu (i.e. 75 % Ba; 25% Sr). Here, Eu is introduced and replaces at least part of M, i.e. one or more of Ba, Sr, and Ca). Likewise, the material (Ba,Sr,Ca)AlSiN₃:Eu can also be indicated as MA1SiN₃:Eu, wherein M is one or more elements selected from the group consisting of barium (Ba), strontium (Sr) and calcium (Ca); especially, M comprises in this compound calcium or strontium, or calcium and strontium, more especially calcium. Here, Eu is introduced and replaces at least part of M (i.e. one or more of Ba, Sr, and Ca). Eu in the above indicated luminescent materials is substantially or only in the divalent state, as is known to the person skilled in the art. Hence, such nitride luminescent materials may also be or comprise converter elements, here especially Eu²⁺.

Especially, the luminescent material may be an inorganic luminescent material, such as one or more of the above-described trivalent cerium or divalent europium comprising oxides, oxynitrides, or nitrides.

Especially, the luminescent body comprises a ceramic luminescent body. Hence, in specific embodiments the luminescent body is defined by a ceramic luminescent material. Therefore, in specific embodiments the luminescent material is a luminescent material that can be provided a ceramic luminescent body.

Many of the above-mentioned materials, especially the garnet materials, can be provided as ceramics (ceramic body or ceramic slab). At least this applies for the above described A₃BsO₁₂:Ce, or with an alternative formula described A₃B'₂C"₃O₁₂.

Ceramic bodies are known in the art. Especially, the ceramic material may be obtainable by a sintering process and/or a hot pressing process, optionally followed by an annealing in an (slightly) oxidizing atmosphere. The term "ceramic" especially relates to an inorganic material that is - amongst others - obtainable by heating a (poly crystalline) powder at a temperature of at least 500 °C, especially at least 800 °C, such as at least 1000 °C, like at least 1400 °C, under reduced pressure, atmospheric pressure or high pressure, such as in the range of 10⁻⁸ to 500 MPa, such as especially at least 0.5 MPa, like especially at least 1 MPa, like 1 to about 500 MPa, such as at least 5 MPa, or at least 10 MPa, especially under uniaxial or isostatic pressure, especially under isostatic pressure. A specific method to obtain a ceramic is hot isostatic pressing (HIP), whereas the HIP process may be a post-sinter HIP, capsule HIP or combined sinter-HIP process, like under the temperature and pressure conditions as indicate above. The ceramic obtainable by such method may be used as such, or may be further processed (like polishing). A ceramic especially has density that is at least 90% (or higher, see below), such as at least 95%, like in the range of 97-100 %, of theoretical density (i.e. the density of a single crystal). A ceramic may still be poly crystalline, but with a reduced, or strongly reduced volume between grains (pressed particles or pressed agglomerate particles). The heating under elevated pressure, such as HIP, may e.g. be performed in an inert gas, such as comprising one or more of N₂ and argon (Ar). Especially, the heating under elevated pressures is preceded by a sintering process at a temperature selected from the range of 1400-1900 °C, such as 1500-1800 °C. Such sintering may be performed under reduced pressure, such as at a pressure of 10⁻² Pa or lower. Such sintering may already lead to a density of in the order of at least 95%, even more especially at least 99%, of theoretical density. After both the pre-sintering and the heating, especially under elevated pressure, such as HIP, the density of the light transmissive body can be close to the density of a single crystal. However, a difference is that grain boundaries are available in the light transmissive body, as the light transmissive body is polycrystalline. Such grain boundaries can e.g. be detected by optical microscopy or SEM. Hence, herein the light transmissive body especially refers to a sintered polycrystalline having a density substantially identical to a single crystal (of the same material). Such body may thus be highly transparent for visible light (except for the absorption by the light absorbing species such as especially Ce³⁺).

In embodiments, the body has a lateral dimensions width or length (W or L) or diameter (D) and a thickness or height (H). In embodiments, (i) D≥H or (ii) and W≥H and/or L≥H. The luminescent tile may be transparent or light scattering. In embodiments, the tile may comprise a ceramic luminescent material. In specific embodiments, L≤10 mm, such as especially L≤5mm, more especially L≤3mm, most especially L≤2 mm. In specific embodiments, W≤10 mm, such as especially W≤5mm, more especially W≤3mm, most especially W≤2 mm. In specific embodiments, H≤10 mm, such as especially H≤5mm, more especially H≤3mm, most especially H≤2 mm. In specific embodiments, D≤10 mm, such as especially D≤5mm, more especially D≤3mm, most especially D≤2 mm. In specific embodiments, the body may have in embodiments a thickness in the range 50 µm - 1 mm. Further, the body may have lateral dimensions (width/diameter) in the range 100 µm - 10 mm. In yet further specific embodiments, (i) D>H or (ii) W>H and W>H. Especially, the lateral dimensions like length, width, and diameter are at least 2 times, like at least 5 times, larger than the height. Herein, the height of the luminescent body is also indicated with H1.

Further, the luminescent body comprises an external surface. On at least part of this surface, a coating may be provided (see also below).

The assembly further comprises a thermally conductive element. A thermally conductive element especially comprise thermally conductive material. A thermally conductive material may especially have a thermal conductivity of at least about 20 W/m/K, like at least about 30 W/m/K, such as at least about 100 W/m/K, like especially at least about 200 W/m/K. In yet further specific embodiments, a thermally conductive material may especially have a thermal conductivity of at least about 10 W/m/K. In embodiments, the thermally conductive material may comprise of one or more of copper, aluminum, silver, gold, silicon carbide, aluminum nitride, boron nitride, aluminum silicon carbide, beryllium oxide, a silicon carbide composite, aluminum silicon carbide, a copper tungsten alloy, a copper molybdenum carbide, carbon, diamond, and graphite. Alternatively, or additionally, the thermally conductive material may comprise or consist of aluminum oxide.

Herein, especially, however, the thermally conductive element comprises metal material. For instance, the metal material may comprise one or more of copper, aluminum, silver, gold, and a metal alloy. The metal alloy may comprise one or more of copper tungsten alloys, aluminum alloys, titanium alloys, etc.

The thermally conductive element may be a heat sink or may be in thermal contact with a heat sink.

Heatsinks are known in the art. The term "heatsink" (or heat sink) may especially be a passive heat exchanger that transfers the heat generated by device, such as an electronic device or a mechanical device, to a fluid (cooling) medium, often air or a liquid coolant. Thereby, the heat is (at least partially) dissipated away from the device. A heat sink is especially designed to maximize its surface area in contact with the fluid cooling medium surrounding it. Hence, especially a heatsink may comprise a plurality of fins. For instance, the heatsink may be a body with a plurality of fins extending thereof. A heatsink especially comprises (more especially consists of) a thermally conductive material. The term "heatsink" may also refer to a plurality of (different) heatsinks.

An element may be considered in thermal contact with another element if it can exchange energy through the process of heat. Hence, the elements may be thermally coupled. In embodiments, thermal contact can be achieved by physical contact. In embodiments, thermal contact may be achieved via a thermally conductive material, such as a thermally conductive glue (or thermally conductive adhesive). Thermal contact may also be achieved between two elements when the two elements are arranged relative to each other at a distance of equal to or less than about 10 µm, though larger distances, such as up to 100 µm may be possible. The shorter the distance, the better the thermal contact. Especially, the distance is 10 µm or less, such as 5 µm or less. The distance may be the distanced between two respective surfaces of the respective elements. The distance may be an average distance. For instance, the two elements may be in physical contact at one or more, such as a plurality of positions, but at one or more, especially a plurality of other positions, the elements are not in physical contact. For instance, this may be the case when one or both elements have a rough surface. Hence, in embodiments in average the distance between the two elements may be 10 µm or less (though larger average distances may be possible, such as up to 100 µm). In embodiments, the two surfaces of the two elements may be kept at a distance with one or more distance holders.

Especially, at least 25% of the external surface is in thermal contact with the thermally conductive element. Here, the term "thermal contact" may especially indicated that the external surface of the luminescent body is in direct contact (or "physical contact") with the thermally conductive element or part of the external surface of the luminescent body and the thermally conductive element sandwich the optional coating layer. Further, especially then the coating layer is also thermally conductive.

As indicated above, the coating layer may be configured between the luminescent body and the thermally conductive element. Especially, the coating layer covers part of the external surface. At least part of the coating layer is especially in contact with the thermally conductive element.

Especially, the coating layer and the thermally conductive element are conformal to the luminescent body. For instance, this may be obtained by using deposition techniques.

In embodiments, the coating layer may be provided by one or more of CVD (chemical vapor deposition) and PVD (physical vapor deposition). Optionally, in embodiments the coating layer may be provided by a wet chemical deposition technique, like sol-gel coating. Note that the coating layer may in embodiments comprise a multi-layer, of which two or more layers may be deposited via different deposition techniques, or one or more layers may be deposited via the same deposition techniques, or all layers may be deposited with the same deposition techniques.

In embodiments, (also) the thermally conductive element may be provided via a deposition technique. Especially, the thermally conductive element may be provided via supersonic particle deposition. Hence, in embodiments the thermally conductive element comprises supersonic particle deposited metal material.

Supersonic particle deposition is known in the art.

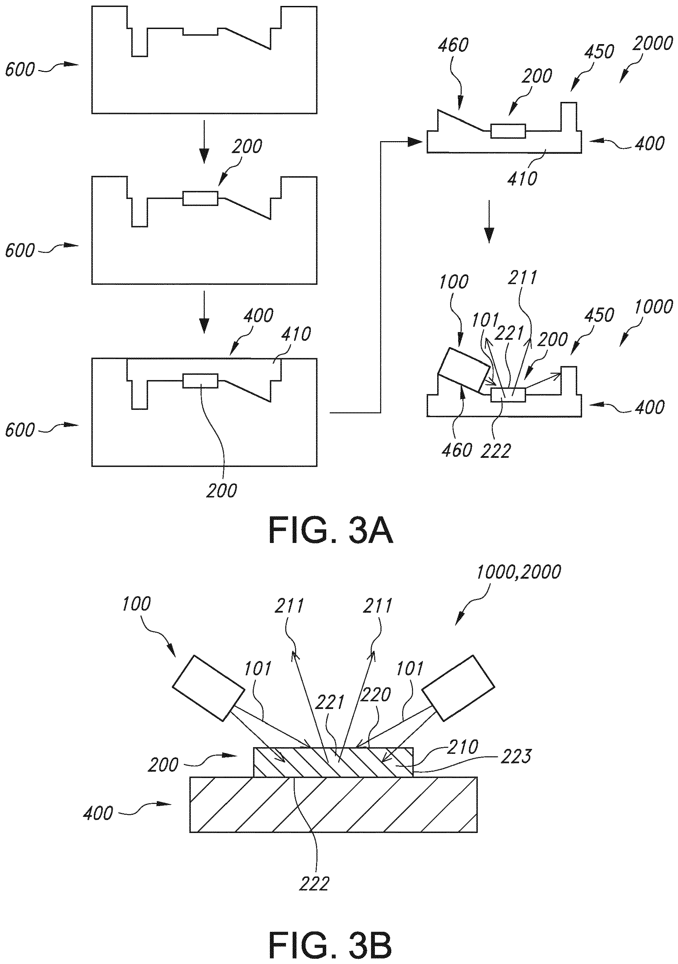

Victor Champagne Jr. et al., in Aircraft Sustainment and Repair, 2018, "Introduction to Supersonic Particle Deposition", for instance, describes that supersonic particle deposition (SPD) or `cold spray (CS)' is a materials consolidation process whereby micron-sized particles of a metal, ceramic and/or polymer are accelerated through a spray gun fitted with a De Laval rocket nozzle using a heated high-pressure gas (i.e. helium or nitrogen) such that the particles exit at supersonic velocities and consolidate upon impacting a suitable surface to form a coating or a near-net shaped part by means of ballistic impingement. The particles utilized are typically in the form of commercially available powders, ranging in diameter from about 5 to 100 µm, and are accelerated at velocities from 300 to 1500 m/s by injection into a high-velocity stream of gas. Particles that are < 5 µm do not have enough momentum to leave the gas stream and impact the substrate. Hence, nanoparticles cannot be deposited using cold spray in this fashion. Instead agglomerated nanoparticles or nanostructured powder within the feasible size range are used and CS has been shown to produce nanostructured coatings, as well as nanostructured bulk materials. The high-velocity gas stream is generated via the expansion of a pressurized, preheated, gas through a converging-diverging de Laval rocket nozzle. The pressurized gas is expanded to supersonic velocities, with an accompanying decrease in pressure and temperature. The particles, which can be carried from the pressurized powder feeder through a separate line or in the same line as the gas stream, are injected into the nozzle either prior to the throat of the nozzle or downstream of the throat. The particles are subsequently accelerated by the main nozzle gas flow and impact onto a substrate after exiting the nozzle. If the critical impact velocity of the accelerating particles is attained upon impact, the solid particles deform and create a bond with the substrate. Adequate velocity is necessary for optimal particle consolidation and coating density, and several important CS process parameters, including gas conditions, particle characteristics and nozzle geometry, affect the particle velocity. It has been well established that impacting particles must exceed the `critical velocity' to deposit otherwise they may rebound off of the substrate. The magnitude of the critical velocity can be estimated through the use of empirical relationships, which generally depend on particle material characteristics, such as density, ultimate strength, yield and melting point as well as the particle temperature. As the process continues, particles continue to impact the substrate and form bonds with the underlying consolidated material resulting in an adherent, uniform deposit with very little porosity and high adhesive and cohesive bond strength. The term `cold spray' has been used to describe this process due the fact that the temperatures are typically well below that of the melting temperature of the feed stock powders. The heated gas stream cools significantly as it expands through the de Laval rocket nozzle. Since the temperature of the gas stream is always below the melting point of the particulate material during cold spray, the resultant consolidated material is formed in the solid state. Since the adhesion of the impacted particles to the substrate, as well as the cohesion of the subsequent layers of CS deposit, is accomplished in the solid state at low temperatures, the characteristics of the cold spray material are quite unique in many regards. The low temperatures associated with the cold spray process are desirable when attempting to maintain the microstructure, grain size and elemental composition of the starting feed stock powder. Such is the case with nanostructured powders because the risk of grain growth and phase transformation is minimal or nonexistent. In addition, particle oxidation is avoided, as well as deleterious tensile stresses that occur during solidification and the accompanying thermal contraction associated with conventional thermal spray processes. The cold spray process has been developed to deposit a wide variety of engineering materials as shown in Fig. 3, including steels, titanium, aluminum, nickel, zinc, tin, copper, brass, Inconel, cermets, polymers and/or combinations of these materials and many more with near theoretical density. Herein, SPD is especially used to deposit metal. The thus obtained metal layer may have the function of a thermally conductive element, such as a heat sink. Hence, the thermally conductive element comprises supersonic particle deposited metal material. See e.g. also https://www.sciencedirect.com/topics/engineering/supersonic-particle-deposition/pdf.

When using SPD, metal particles may be impacted on the (coated) luminescent body and subsequently on the preceding SPD material on the (coated) luminescent body. The impacted particles may deform. The impacted particles essentially define the thermally conductive element. Due to the method of SPD, it may be that the thermally conductive element has some porosity. When coating thicker layers, the overall porosity may be less than about 5%, such as about 2%, or less, or even about 1% or less. The porosity may be derived from the density of the thermally conductive body compared to the theoretical density of the same body when made e.g. via state of the art metal formation processes, like via melting. Hence, when making a cross-section of the thermally conductive layer, the person skilled in the art may determine whether SPD is used, or e.g. whether the metal layer is e.g. made via melting or other technique. The lower the porosity, the better the thermal management may be.

In the present invention, in embodiments the porosity can also be higher, than e.g. about 2%, or even higher than about 10%. As there is very good thermal contact (especially due to the use of metals), the porosity may be higher, while still maintaining a good thermally conductive function. Further, a higher porosity may also imply less impacts on the luminescent body (or the coating layer). Hence, crack formation may be prevented or diminished. This allows lighter weight thermally conductive elements having a high thermal conductivity. Hence, the supersonic particle deposited metal material has a porosity selected from the range of 5-30%, such as in embodiments selected from the range of 5-25%, like especially, 5-20%, such as 10-20%, such as up to about 15%.

As will be further elucidated below, the coating may have a protection function. Nevertheless, it may be desirable to start SPD first with smaller particles, that may have a smaller impact, followed by larger particles, on the SPD material formed from the smaller particles. A smaller impact may reduce crack formation and a lower porosity may provide a better thermal management. In this way, a multi-layer thermally conductive element may be generated.

Therefore, in embodiments the thermally conductive element may comprise a multilayer comprising the metal material, wherein a first layer of the multilayer has a first thickness (d1) and a first porosity p1, wherein a second layer of the multilayer has a second thickness (d2) and a second porosity p2, wherein the first layer is configured closer to the luminescent body than the second layer.

Especially, in embodiments d1≥ 1 mm, d2≥ 1 mm.

In embodiments, d1<d2. For instance, in embodiments the more porous layer closer to the luminescent body may be thinner than the less porous layer more remote from the luminescent body. This may lead to a more lightweight thermally conductive body and good thermal management.

In alternative embodiments, d2<d1. For instance, in embodiments the more porous layer closer to the luminescent body may be thicker than the less porous layer more remote from the luminescent body. This may lead to an even more lightweight thermally conductive body and nevertheless relatively good thermal management.

Further, in embodiments p1<p2, such as p1≤2^{∗}p2.

However, in yet other embodiments it may be chosen to have a larger porosity closer to the luminescent body and a smaller porosity further away from the luminescent body. Hence, in yet other embodiments p2<p1, such as p2≤2^{∗}p1.

In yet other embodiments, the porosity may be reduced by choosing one or more of (a) less deformable particles and more deformable particles, and (b) smaller particles and larger particles. Hence, in embodiments the thermally conductive material may be based on a combination of different metals and/or metal particles of different sizes. For instance, in embodiments e.g. Cu particles and Al particles may be used to create the thermally conductive layer. Al may be less hard, thus easier to create low porosity, while Cu may give the best thermal management performance. However, for higher porosities different particle size distributions of Cu may be applied. For lower porosity, e.g. Cu particles with a relatively small size distribution may be applied, but especially with relatively large particles.

A total thickness of the thermally conductive element (whether or not comprising a multilayer) may e.g. be up to 10 mm, or even up to 20 mm, or even larger.

Of course, one could use a ready thermally conductive element, such as a heatsink, and thermally contact the thermally conductive element and the luminescent body, such as physically contact or by gluing or by other method of attaching. One could also arrange the luminescent body in a cavity of a ready thermally conductive element. However, in such embodiments there may be less conformality (between the bodies). With the method of the invention, the contact may be very intimate and may be over essentially the entire surface parts that are configured against each other, more especially: coated on each other.

The luminescent body may in embodiments have a disc like shape, or a cube like shape, or a bar like shape. Especially, at least 15% of the external surface is in thermal contact with the thermally conductive element. More especially, the dimensions of the luminescent body and/or the configuration of the thermally conductive element may be chosen such, that at least 20%, such as at least 25% of the external surface is in thermal contact with the thermally conductive element.

In embodiments, the luminescent body may have n faces, wherein n is at least 3, such as 3 in the case of a disc, and 6 in the case of a cube or a bar. Especially, at least 80% of at least a single face is in contact with the thermally conductive layer, either directly, or indirectly via the coating layer. More especially, in embodiments at least 80% of a single face, and at least 50% of the n-2 other faces, may be in contact with the thermally conductive layer, either directly, or indirectly via the coating layer. In further specific embodiments, n-2, even more especially n-1, faces are in contact with the thermally conductive layer, either directly, or indirectly via the coating layer. As indicated above, contact may be physical contact and/or chemical binding and/or Vander Waals binding and/or adhesive binding.

As indicated above, at least 25% of the external surface may in embodiments be in thermal contact with the thermally conductive element. In embodiments, 25-95% of the external surface is in contact with the thermally conductive element. In yet other embodiments, 25-95% of the external surface is in contact with the coating layer and a substantial part thereof, essentially all, is in contact with the thermally conductive element. Hence, 25-95% of the external surface is surrounded by the thermally conductive element. For instance, in specific embodiments also at least part of an edge may be thermally coupled with the thermally conductive element. Hence, at least part(s) of one or more faces, especially at least parts of two or more faces, of the luminescent body may be in thermal contact with the thermally conductive element.

In embodiments, the luminescent body has a first face and a second face. These two faces may defined a height. Hence, the first face and the second face may define a height (H1) of the luminescent body. Further, these two faces may defined an edge or side face. The edge and the two faces may define the external face of the luminescent body. The luminescent body may comprise one or more side faces, e.g. dependent upon whether the luminescent body has a disc-like shape or a rectangular plate-like shape, or other shape. Especially, the luminescent body may be provided as tile.

The first face may also be indicated as "first major face". The second face may also be indicated as "second major face". The first face and the second face may together define at least 50%, such as at least 70%, like especially at least 80% of the external surface of the luminescent body. As can be derived from the above, the first face and second face may be configured opposite of each other, and are in general parallel to each other.

Therefore, in embodiments the entire second face may be directed to the thermally conductive element and the entire first face is not directed to the thermally conductive element. This embodiment may be used in a reflective mode, or optionally in specific embodiments a transmissive mode parallel to the second face (see further below). Further, this embodiment may allow a good thermal contact with the thermally conductive element.

In alternative embodiments, the entire second face may be directed to the thermally conductive element, except for one or more pinholes, and the entire first face is not directed to the thermally conductive element. Especially, this embodiment may be used in a transmissive mode, with light entering the body via the one or more pinholes. Nevertheless, this embodiment may also be used in a reflective mode, or optionally in specific embodiments a transmissive mode parallel to the second face (see further below). Further, this embodiment may allow a good thermal contact with the thermally conductive element.

In alternative embodiments, the entire second face may be directed to the thermally conductive element and part of the entire first face may be directed to the thermally conductive element. This embodiment may be used in a reflective mode, or optionally in specific embodiments a transmissive mode parallel to the second face (see further below). Further, this embodiment may allow an even better thermal contact with the thermally conductive element.

In alternative embodiments, the entire second face may be directed to the thermally conductive element, except for one or more pinholes, and part of the entire first face may be directed to the thermally conductive element. Especially, this embodiment may be used in a transmissive mode, with light entering the body via the one or more pinholes. Nevertheless, this embodiment may also be used in a reflective mode, or optionally in specific embodiments a transmissive mode parallel to the second face (see further below). Further, this embodiment may allow an even better good thermal contact with the thermally conductive element.

Further, in embodiments at least part of the edge may be directed to the thermally conductive element.

The phrase "directed to the thermally conductive element", and similar phrases, may especially indicate that there is thermal contact between the indicated face, or at least part thereof, that is directed to the thermally conductive element, and the thermally conductive element. More especially, there is contact between the indicated face, or at least part thereof, that is directed to the thermally conductive element, and the thermally conductive element, or the indicated face, or at least part thereof, that is directed to the thermally conductive element, and the thermally conductive element, sandwich the coating layer. Herein, the term "sandwich" may especially indicate that the elements that sandwich another element, or both at another side of the other element, in contact with the element; vice versa, the sandwiched element, is in contact with both the elements that sandwich the element that is sandwiched. Herein, the term "in contact" especially refer to physical contact and/or chemical binding and/or Vander Waals binding and/or adhesive binding. As indicated above, in specific embodiments, n-2, even more especially n-1, faces are in contact with the thermally conductive layer, either directly, or indirectly via the coating layer. Coating layers and SPD layers are known in the art, as their binding with a substrate are known.

For even better thermal contact, the surrounding of the luminescent body by the thermally conductive element may be larger than about 40%, such as about 50% and higher. However, the surrounding will not be 100%, as it is herein contemplated to irradiate the luminescent body with light, and allowing the luminescent material light escape from the assembly (see further also below). Hence, in embodiments more than 40%, such as even more than 50%, and up to 95% of the external surface may be surrounded by the thermally conductive element, such as selected from the range of 50-80%, such as even selected from the range of 55-80%.

The thermally conductive element may especially have a larger volume than the luminescent body. This may allow a good dissipation from the heat form the luminescent body to the thermally conducive element. Hence, the thermally conductive element may also be indicated as thermally conductive body. In specific embodiments, the luminescent body may have a first volume V1, the thermally conductive element has a second volume V2, and especially V2≥2^{∗}V1. Even more especially V2≥10*V1. For instance, in embodiments V2≥20^{∗}V1. Further, in specific embodiments 5≤V2/V1≤1.10⁶, such as 10≤V2/V1≤1.10⁵, such as in embodiments 10≤V2/V1≤1.10³.

The coating layer may have one or more functions selected from (i) reflective for light, (ii) protective for the luminescent body in view of the SPD process, and (iii) adhesive for the SPD material. Further, especially the coating layer may have properties and/or be provided in such a way, that good contact is provided on the luminescent body. This may in embodiments be obtained with a deposition process, such as one or more of CVD, and PVD, of e.g. aluminum or silver. Such materials may also have a relatively high reflection for light, such as visible light. Further, as indicated above, the coating layer may also comprise a multi-layer. This may e.g. facilitate incorporation of two or more functions as indicated above. However, in embodiments also single layers may have more than one function. For instance, the above-mentioned aluminum or silver layer may not only have a reflection function, but may also have a protection function.

Hence, in embodiments the coating layer may comprise a reflective layer, wherein the reflective layer comprises one or more of aluminum and silver, wherein especially the reflective layer is in contact with the luminescent body. Especially, the reflective layer has a reflection of at least 50%, especially at least 65%, such as even more especially at least 80%, under perpendicular radiation for one or more wavelengths selected from one or more of the UV wavelength range and the visible wavelength range. More especially, the reflective layer has a reflection of at least 50%, especially at least 65%, such as even more especially at least 80%, under perpendicular radiation for one or more wavelengths selected from the visible wavelength range.

This reflectivity is determined in relation to perpendicular irradiation. However, this does not imply that radiation is necessarily perpendicular. It is only used for determining the reflectivity. In specific embodiments, the reflection for one or more of the light source light and luminescent material light may be at least 85%, such as at least 90%, even more especially at least 95%, even more especially at least 99%, under perpendicular irradiation with the one or more of the light source light and luminescent material light. Especially, these values apply for at least the light source light, and optionally also for the luminescent material light. Further, the reflectivity of the reflective layer may in embodiments such that during operation at least 80%, even more especially at least 90%, yet even more especially at least 95% of the light source light irradiating the mirror is reflected (back into the luminescent body). See further below in relation to the light source light and luminescent material light. The terms "visible", "visible light" or "visible emission" and similar terms refer to light having one or more wavelengths in the range of about 380-780 nm. Herein, UV may especially refer to a wavelength selected from the range of 200-380 nm.

The reflective layer may be relatively thin, such as e.g. in the range of 20-1000 nm, like e.g. 50-1000 nm. The reflective layer may also be relatively thicker, which may e.g. allow both a reflection function and a protective function. Hence, the coating layer may comprise a layer that may be strong enough to withstand the particle bombardment (during the SPD process).

Hence, in embodiments the coating layer may have a thickness (d3,d4) selected from the range of 1-1000 µm. In specific embodiments the coating layer may comprises an aluminum layer (510,520). In alternative or additional embodiments, the coating layer may comprise a silver layer. Especially when the coating layer also includes a protective function, the volume of the coating layer may be substantial. Hence, in embodiments the luminescent body has a first volume V1, the coating layer has a third volume V3, wherein V3≥0.1^{∗}V1, such as V3≥0.5^{∗}V1, like in specific embodiments V3≥1^{∗}V1. In specific embodiments, 1<V3/V1≤10.

In embodiments, the coating layer may comprise an adhesion layer. In general, such adhesion layer may be on top of a reflective layer or on top of a protective layer. Hence, in embodiments, the coating layer comprises an adhesion layer. Especially, the adhesion layer may be in contact with the thermally conductive element. Further, in specific embodiments the adhesion layer may have an adhesion layer thickness (d5) selected from the range of 50-1000 nm. Especially, in embodiments the adhesion layer comprises chromium.

Assuming a reflective layer, such layer may especially be configured directly on luminescent body. Assuming a separate protective layer, such layer may be configured directly on the reflective layer, or would there not be a reflective layer, directly on the luminescent body. Assuming a separate adhesion layer, in general such layer may be the substrate for the SPD process. Further, such adhesion layer may be configured directly on a reflection layer, when only a reflection layer is present, or on a protective layer, when (also) a protective layer is present. Especially, all layers of the coating layer may be provided by one or more of CVD and PVD, such as especially PVD. Further, especially the coating layer comprises essentially only one or more metal layers (though some oxide formation may not be excluded). Essentially, however, in embodiments the coating layer may be metallic.

The luminescent material may be used to generate luminescent material light. The luminescent material may especially be configured to convert at least part of light source light of a light source into luminescent material light. Due to the irradiation of the luminescent material and the conversion process, heat may be generated. This can be dissipated at least partly via the thermally conductive element. Hence, in specific embodiments the assembly may further comprise a light source configured to generate light source light, wherein the light source is configured to irradiate with the light source light the luminescent body, wherein the luminescent material is configured to convert at least part of the light source light into luminescent material light.

The term "light source" may refer to a semiconductor light-emitting device, such as a light emitting diode (LEDs), a resonant cavity light emitting diode (RCLED), a vertical cavity laser diode (VCSELs), an edge emitting laser, etc... The term "light source" may also refer to an organic light-emitting diode, such as a passive-matrix (PMOLED) or an active-matrix (AMOLED). In a specific embodiment, the light source comprises a solid-state light source (such as a LED or laser diode). In an embodiment, the light source comprises a LED (light emitting diode). The term LED may also refer to a plurality of LEDs. Further, the term "light source" may in embodiments also refer to a so-called chips-on-board (COB) light source. The term "COB" especially refers to LED chips in the form of a semiconductor chip that is neither encased nor connected but directly mounted onto a substrate, such as a PCB. Hence, a plurality of semiconductor light sources may be configured on the same substrate. In embodiments, a COB is a multi LED chip configured together as a single lighting module. The term "light source" may also relate to a plurality of (essentially identical (or different)) light sources, such as 2-2000 solid state light sources. In embodiments, the light source may comprise one or more micro-optical elements (array of micro lenses) downstream of a single solid-state light source, such as a LED, or downstream of a plurality of solid-state light sources (i.e. e.g. shared by multiple LEDs). In embodiments, the light source may comprise a LED with on-chip optics. In embodiments, the light source comprises a pixelated single LEDs (with or without optics) (offering in embodiments on-chip beam steering). The term "laser light source" especially refers to a laser. Such laser may especially be configured to generate laser light source light having one or more wavelengths in the UV, visible, or infrared, especially having a wavelength selected from the spectral wavelength range of 200-2000 nm, such as 300-1500 nm. The term "laser" especially refers to a device that emits light through a process of optical amplification based on the stimulated emission of electromagnetic radiation. Especially, in embodiments the term "laser" may refer to a solid-state laser.

Hence, in embodiments the light source comprises a laser light source. In embodiments, the terms "laser" or "solid state laser" may refer to one or more of cerium doped lithium strontium (or calcium) aluminum fluoride (Ce:LiSAF, Ce:LiCAF), chromium doped chrysoberyl (alexandrite) laser, chromium ZnSe (Cr:ZnSe) laser, divalent samarium doped calcium fluoride (Sm:CaF₂) laser, Er:YAG laser, erbium doped and erbium-ytterbium codoped glass lasers, F-Center laser, holmium YAG (Ho:YAG) laser, Nd:YAG laser, NdCrYAG laser, neodymium doped yttrium calcium oxoborate Nd:YCa₄O(BO₃)₃ or Nd:YCOB, neodymium doped yttrium orthovanadate (Nd:YVOa) laser, neodymium glass (Nd:glass) laser, neodymium YLF (Nd:YLF) solid-state laser, promethium 147 doped phosphate glass (147Pm³⁺:glass) solid-state laser, ruby laser (Al₂O₃:Cr³⁺), thulium YAG (Tm:YAG) laser, titanium sapphire (Ti:sapphire; Al₂O₃:Ti³⁺) laser, trivalent uranium doped calcium fluoride (U:CaF₂) solid-state laser, Ytterbium doped glass laser (rod, plate/chip, and fiber), Ytterbium YAG (Yb:YAG) laser, Yb₂O₃ (glass or ceramics) laser, etc. In embodiments, the terms "laser" or "solid state laser" may refer to one or more of a semiconductor laser diode, such as GaN, InGaN, AlGaInP, AlGaAs, InGaAsP, lead salt, vertical cavity surface emitting laser (VCSEL), quantum cascade laser, hybrid silicon laser, etc.

A laser may be combined with an upconverter in order to arrive at shorter (laser) wavelengths. For instance, with some (trivalent) rare earth ions upconversion may be obtained or with non-linear crystals upconversion can be obtained. Alternatively, a laser can be combined with a downconverter, such as a dye laser, to arrive at longer (laser) wavelengths.

As can be derived from the below, the term "laser light source" may also refer to a plurality of (different or identical) laser light sources. In specific embodiments, the term "laser light source" may refer to a plurality N of (identical) laser light sources. In embodiments, N=2, or more. In specific embodiments, N may be at least 5, such as especially at least 8. In this way, a higher brightness may be obtained. In embodiments, laser light sources may be arranged in a laser bank (see also above). The laser bank may in embodiments comprise heat sinking and/or optics e.g. a lens to collimate the laser light.

The laser light source is configured to generate laser light source light (or "laser light"). The light source light may essentially consist of the laser light source light. The light source light may also comprise laser light source light of two or more (different or identical) laser light sources. For instance, the laser light source light of two or more (different or identical) laser light sources may be coupled into a light guide, to provide a single beam of light comprising the laser light source light of the two or more (different or identical) laser light sources. In specific embodiments, the light source light is thus especially collimated light source light. In yet further embodiments, the light source light is especially (collimated) laser light source light. The phrases "different light sources" or "a plurality of different light sources", and similar phrases, may in embodiments refer to a plurality of solid-state light sources selected from at least two different bins. Likewise, the phrases "identical light sources" or "a plurality of same light sources", and similar phrases, may in embodiments refer to a plurality of solid-state light sources selected from the same bin.

The light source is especially configured to generate light source light having an optical axis (O), (a beam shape,) and a spectral power distribution. The light source light may in embodiments comprise one or more bands, having band widths as known for lasers. In specific embodiments, the band(s) may be relatively sharp line(s), such as having full width half maximum (FWHM) in the range of less than 20 nm at RT, such as equal to or less than 10 nm. Hence, the light source light has a spectral power distribution (intensity on an energy scale as function of the wavelength) which may comprise one or more (narrow) bands.

The beams (of light source light) may be focused or collimated beams of (laser) light source light. The term "focused" may especially refer to converging to a small spot. This small spot may be at the discrete converter region, or (slightly) upstream thereof or (slightly) downstream thereof. Especially, focusing and/or collimation may be such that the cross-sectional shape (perpendicular to the optical axis) of the beam at the discrete converter region is essentially not larger than the cross-section shape (perpendicular to the optical axis) of the discrete converter region (where the light source light irradiates the discrete converter region). Focusing may be executed with one or more optics, like (focusing) lenses. Especially, two lenses may be applied to focus the laser light source light. Collimation may be executed with one or more (other) optics, like collimation elements, such as lenses and/or parabolic mirrors. In embodiments, the beam of (laser) light source light may be relatively highly collimated, such as in embodiments ≤2° (FWHM), more especially ≤1° (FWHM), most especially ≤0.5° (FWHM). Hence, ≤2° (FWHM) may be considered (highly) collimated light source light. Optics may be used to provide (high) collimation (see also above).

In embodiments, laser light sources may be arranged in a laser bank. The laser bank may in embodiments comprise heat sinking and/or optics e.g. a lens to collimate the laser light. A laser bank may e.g. comprise at least 10, such as at least 20 laser light sources.

The light source is configured to generate light source light. The light source is especially selected to provide light source light that can excite the luminescent material. For instance, in embodiments the light source light may be blue light, as blue light can excite a number of possible garnet type materials. However, other wavelengths than blue may also be possible. For instance, in embodiments the light source light may be ultraviolet or green. Different light sources configured to generate spectrally different light source light may also be possible.

Especially, as indicated above the light source is a first laser light source. Hence, the light source light may be first laser light source light.

The light source light is the light generated by the light source (during operation of the light source).

The assembly comprising the light source may also be indicated as "light generating device" (or "lighting device").

Herein, especially in embodiments the light source is functionally coupled to the thermally conductive material (thermally conductive body), more especially physically coupled. For instance, the thermally conductive element may provide a support for the light source. Alternatively, physically or chemically, a support may be coupled to the thermally conductive material, to which the light source may be arranged. Hence, the light source is especially part of the assembly. In this way, heat from the light source may also dissipate via the thermally conductive material.

Especially, herein the light source comprises a laser light source. Especially, the laser light source is a solid state laser light source. Further, especially the light source light may essentially consist of light (laser light) generated by the laser light source. Hence, in embodiments the light source is a laser light source.

Above, examples of luminescent material are provided. Especially, in embodiments the luminescent material may comprise a luminescent material of the type A₃BsO₁₂:Ce, wherein A comprises one or more of Y, La, Gd, Tb and Lu, and wherein B comprises one or more of Al, Ga, In and Sc. Even more especially, the luminescent material may thus be a ceramic body comprising the luminescent material.

The luminescent material is configured downstream of the light source. Hence, the luminescent material and the light source may be radiationally coupled. The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

The terms "radiationally coupled" or "optically coupled" may especially mean that (i) a light generating element, such as a light source, and (ii) another item or material, are associated with each other so that at least part of the radiation emitted by the light generating element is received by the item or material. In other words, the item or material is configured in a light-receiving relationship with the light generating element. At least part of the radiation of the light generating element will be received by the item or material. This may in embodiments be directly, such as the item or material in physical contact with the (light emitting surface of the) light generating element. This may in embodiments be via a medium, like air, a gas, or a liquid or solid light guiding material. In embodiments, also one or more optics, like a lens, a reflector, an optical filter, may be configured in the optical path between light generating element and item or material. Further embodiments of the light source and luminescent body arrangement are further described below.

In embodiments, the assembly may comprise a plurality of light sources, of which two or more may be different and/or of which two or more are the same.

The light source and luminescent body may be configured, optionally in combination with optics, in a transmissive mode or in a reflective mode. In the transmissive mode, the light source light may propagate through the luminescent body and would light source light escape, there may be no reflector. In the transmissive mode, a reflector may be configured at the opposite side, such that light source light is reflected back into the luminescent body. Further, in the reflective mode at least part, especially at least a substantial part, more especially essentially all, luminescent material light that escapes from the luminescent body may escape from a face that is also (directly) irradiated by the light source (light).

Irradiation may be under perpendicular irradiation, such that e.g. an optical axis of the light source light is essentially perpendicular to a face of the luminescent body. Irradiation may also be under a non-perpendicular angle, such as an optical axis of the light source light having an angle with a face of the luminescent body selected from the range of e.g. larger than 30° but smaller than 90°. To this end, a second protruding part may be applied (see also below).

Dependent upon the embodiments, such as irradiation angle, absorption of the light source light by luminescent material, reflection of the light source light by the luminescent material, etc., part of the light source light may not be absorbed, but may be transmitted and/or reflected. As the light source light may be relatively intense (e.g. the light source may comprise a laser light source), it may be desirable to block such light from escaping from the assembly, especially escaping form the assembly along the same path as the luminescent material light, as this may potentially be dangerous. Hence, a beam dump may be provided.

With the present invention, it may also be possible to produce the thermally conductive body having a beam dump function. To this end, e.g. a protrusion may be created from the thermally conductive material. This may be done during the SPD production of the thermally conductive material, such as by using a mold (see also below). In this way, e.g. laser light that is reflected at the luminescent body may hit the beam dump. In embodiments, the beam dump may be coated with a light absorbing material, such as a black coating.

Hence, in embodiments the thermally conductive element may comprise a first protruding part, which may especially be configured as beam dump for part of the light source light. Alternatively or additionally, in embodiments the thermally conductive element may comprise a second protruding part configured as light source support. Such second protruding part may be a sloped part. Hence, in embodiments the light source maybe configured such that an optical axis of the light source light is under an angle with a face of the luminescent body selected from the range of e.g. larger than 30° but smaller than 90°.

In yet a further aspect, the invention also provides a method for producing an assembly comprising a luminescent body, a thermally conductive element, and (optionally) a coating layer, wherein the method comprises: (a) providing the luminescent body comprising a luminescent material, wherein the luminescent body comprises an external surface; (b) a deposition stage comprising: (b1) providing the (optional) coating layer to part of the external surface; (b2) providing the thermally conductive element comprising metal material to the (optional) coating layer or to part of the external surface, by supersonic particle deposition.

As indicated above, in embodiments, the porosity may be reduced by choosing one or more of (a) less deformable particles and more deformable particles, and (b) smaller particles and larger particles. Hence, in embodiments the thermally conductive material may be based on a combination of different metals and/or metal particles of different sizes. Hence, when producing the thermally conductive elements, two or more types of particles may be applied, which may differ from each other in one or more of particle size distribution and material. Of course, using two or more types of particles, which may differ from each other in one or more of particle size distribution and material, may also be used to provide thermally conductive elements having a higher porosity, or for creating a thermally conductive multilayer. For instance, in the different layers the composition of the different metals may be different, or the particle size distributions are different.

In specific embodiments, the method may (further) comprise providing the coating layer to 25-95% of the external surface.

Especially, in embodiments the method may (further) comprise providing the coating layer to the externa surface by providing one or more of: (i) a reflective layer and (ii) an adhesion layer.

Especially, in embodiments the reflective layer may comprise one or more of aluminum and silver. Further, the reflective layer may be provided by (vapor) deposition of the reflective layer on the external surface (of the luminescent body). This may include depositing one or more precursors on the external surface, optionally treating the thus obtained material, and thereby creating the reflective layer.

Especially, in embodiments the adhesion layer may e.g. comprise chromium. Further, the adhesion layer may be provided by (vapor) deposition of the adhesive layer on the reflective layer or on the external surface or on an optional protection layer. This may include depositing one or more precursors on the reflective layer, or on the external surface, or on an optional protection layer, and optionally treating the thus obtained material, and thereby creating the adhesive layer.

Especially, the thermally conductive element (comprising metal material) is provided on the adhesion layer by supersonic particle deposition.

The supersonic particle deposition may be executed by shielding one or more parts of the luminescent body, such that these parts are not provided with the thermally conductive material. In embodiments, this may also imply providing the coating layer on the luminescent body while shielding one or more parts thereof, such that these parts are not provided with the coating layer. For instance, in this way part of a face may be provided with the (coating layer and) thermally conductive material. Alternatively or additionally, in this way also part of the total number of faces may be provided with the (coating layer and) thermally conductive material. The mold may e.g. be a metal body, a metal carbide body, a metal nitride body, or a ceramic body, though other materials may also be possible.

Hence, in embodiments the method may (further) comprise (i) shielding part of the external surface (of the luminescent body) with a mold element while leaving part of the external surface accessible; (ii) executing the deposition stage; and (iii) removing the mold element. In this way, the assembly of the thermally conductive body and the luminescent body may be provided, wherein the former may essentially be conformal to one or more faces and/or one or more face parts of the luminescent body, such as to 25-95% of the external surface of the luminescent body. Such thermally conductive body may e.g. further comprise a beam dump, integrated in the thermally conductive body.

Some further embodiments are described below.

In embodiments, the luminescent material is comprised by or provided as a (light transmissive) body. In embodiment, the luminescent material is comprised by or provided as (light transmissive) layer. The body may be (relatively) thin, and may in embodiment be a (thin) layer. Especially, in embodiments, the luminescent material is comprised by a ceramic body. Ceramic bodies allow a relatively high transmission of light, see also below. Hence, in specific embodiments the luminescent body may comprise a ceramic body. Especially, in embodiments the luminescent body is a ceramic body.

Especially, the light source light may be transmitted through the luminescent body and be reflected back in the luminescent body by the mirror. In this way, at least part of the light source light travels at least once in the direction of the mirror and subsequently at least part of the thickness (or height) of the luminescent body back in a direction again away from the mirror. Hence, instead of a single optical path, like in normal transmission, the optical path can be propagated twice (e.g. in opposite directions). Hence, with a single thickness an effective thickness twice as large may be provided.

To this end, the luminescent body may be at least partly transmissive for the light source light that is also used for generating the luminescent material light. Further, especially the luminescent body may also at least partly transmissive for the luminescent material light. Further, to this end the luminescent body may have a relatively small scattering for the light source light and/or for the luminescent material light, especially at least the light source light, even more especially at least both. Further embodiments are described below. Hence, the luminescent body may have a low scattering, may be relatively transparent for the light source light, even though part should be absorbed, may especially also be relatively transparent for the luminescent material light (as the luminescent material light should especially escape again from the luminescent body). As the luminescent body may also be designed to transfer heat away to a thermally conductive body, such as a heat sink, the luminescent body may be relatively elongated and relatively thin.

The concentration of the converter element, such as Ce, in the luminescent body may thus be selected such that the luminescent body is relatively transparent for the light source light, even though part should be absorbed, but especially also be relatively transparent for the luminescent material light.

Note that in the present invention the concentration of the converter element, such as Ce may be controlled by controlling the converter element amount in the host material, such as Ce in the YAG type material, or Eu in the nitride type material, but also by controlling the (weight) ratio of the luminescent material and the thermally conductive material in the luminescent body.

As indicated above, in embodiments the luminescent body may comprise cerium. More especially, the luminescent material may comprise cerium. In specific embodiments, Ce is available with 0.2-1.5%, such as 0.3-1.2%, even more especially 0.4-1 % relative to the A (in the garnet type material). Here, A refers to the A elements in the herein described garnet materials. Hence, in embodiments the luminescent material may comprise (A₁₋ₓCeₓ)₃B₅O₁₂; with x selected from the range of 0.002-0.015, such as 0.003-0.012, especially 0.004-0.01, wherein A comprises one or more of Y³⁺, Lu³⁺, Gd³⁺, and Tb³⁺ (and optionally La³⁺).

In addition to a high transmission for the wavelength(s) of interest, also the scattering for the wavelength(s) may especially be low. Hence, the mean free path for the wavelength of interest only taking into account scattering effects (thus not taking into account possible absorption (which should be low anyhow in view of the high transmission), may be at least 0.5 times the characteristic length of the body, such as at least the characteristic length of the body, like at least twice the characteristic length of the body. The wavelength of interest may especially be the wavelength at maximum emission of the luminescence of the luminescent material. The term "mean free path" is especially the average distance a ray will travel before experiencing a scattering event that will change its propagation direction. The wavelength(s) of interest may especially include the wavelength at maximum emission of the luminescence of the luminescent material and the peak maximum of the light source light. In embodiments, the mean free path for visible light selected from the range of 380-780 nm, only taking into account scattering effects, may be at least 0.5 times the characteristic length of the body.

The light source is especially selected to excite the luminescent material. Hence, the light source light may have a peak wavelength relatively close, such as within about 20 nm, like within about 10 nm, of an excitation maximum of the luminescent material (light).

Especially, in embodiments the height (H1) is selected from the range of 30-250 µm. Even more especially, the height may be selected from the range of 50-200 µm, such as especially 50-190 µm. In yet more specific embodiments, the height may be selected from the range of 60-180 µm. When the luminescent body has a length and a width, like in (non-square) rectangular embodiments, the length and width may have a ratio selected from the range of 1:5-5:1, such as 1:2-2: 1.

In embodiments, the first face and the second face may be polished faces. In embodiments, the RMS roughness may be equal to or smaller than 20 nm, even more especially equal to or smaller than 10 nm. Especially, the RMS roughness may be equal to or smaller than about 5 nm.

In embodiments, the assembly may comprise two or more different types of light sources, especially laser light sources. One type of the light sources (first light source) may be used to generate the luminescent material light, and irradiates the luminescent body. However, in embodiments the other type of the light sources (second light source) may be used to provide other type of light, which together with the luminescent material light, and optionally the first light source light, may provide in one or more operational modes white light. The second light source may also irradiation the luminescent body. The luminescent body, and/or reflective material downstream of the luminescent body (relative to the second light source), may be reflected.

Especially, the light generating device may (then) further comprise an optical element configured to combine the luminescent material light, and the second light source light of one or more of the one or more second light sources, and in embodiments in the first operational mode the device light is white device light. For instance, this optical element may be a dichroic beam combiner.

In embodiments, the white device light has a color rendering index (CRI) of at least 80, such as at least 85, like at least 90. Further, in embodiments the white device light may have a correlated color temperature (CCT) selected from the range of 1800-8000 K, such as 2000-6500 K, like for instance selected from the range of 2700-3000 K.

The lumen equivalent of the white device light (escaping from the luminescent body) may in embodiments be selected from the range of 290-370 lm/W, such as 300-360 lm/W. In embodiments, the light generating device is configured to provide the luminescent light with power emitted from a radiation exit face of the luminescent body having a power density of 4 W/mm², especially a power density at least 7 W/mm² , more especially at least 9 W/mm², even more especially at least 13W/mm². Hence, in embodiments in an operational mode of the light generating device, the light generating device is configured to generate the luminescent material light from a radiation exit surface (or radiation exit face) of the luminescent converter with a power density of at least 4 W/mm². In yet further specific embodiments, the lighting device may be configured to provide luminescent light in combination with blue and/or red laser light coming out the same surface as the luminescent light providing white light with a brightness of at least 2000 lm/mm², more especially at least 3000 lm/mm², even more especially at least 6000 lm/mm² Herein, "lm" refers to lumen.

In specific embodiments, the one or more second light sources may provide light source light that together with the luminescent material light may provide white light (in one or more operational modes). The one or more second light sources may e.g. include blue light source light, and optionally one or more of orange and red light source light. In specific embodiments, one or more of the one or more second light sources are configured to generate red light source light. Even more especially, one or more of the one or more second light sources are laser light sources configured to generate red (laser) light source light.

Further, in specific embodiments the light generating device may comprise a control system configured to control one or more of the light sources. In specific embodiments, the control system is configured to control one or more optical properties of the device light, especially in further embodiments in dependence of a user interface, a sensor signal, and a timer. In specific embodiments, the one or more optical properties include the correlated color temperature and the color rendering index.

The system, or apparatus, or device may execute an action in a "mode" or "operation mode" or "mode of operation" or "operational mode". Likewise, in a method an action or stage, or step may be executed in a "mode" or "operation mode" or "mode of operation". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed. However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability). Hence, in embodiments, the control system may control in dependence of one or more of an input signal of a user interface, a sensor signal (of a sensor), and a timer. The term "timer" may refer to a clock and/or a predetermined time scheme. See further also below. Especially, there may be a plurality of modes of operation, such as at least two, like at least three, such as at least five, like at least 8, such as at least 16. A change between the modes of operation may be stepwise or stepless. Control can be analogical or digital. The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc... Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface. The control system may also be configured to receive and execute instructions form a remote control. In embodiments, the control system may be controlled via an App on a device, such as a portable device, like a Smartphone or I-phone, a tablet, etc... The device is thus not necessarily coupled to the lighting system, but may be (temporarily) functionally coupled to the lighting system. Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, LiFi, WIFI, ZigBee, BLE or WiMAX, or another wireless technology.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage. The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

In specific embodiments, the light generating device may be comprise a control system configured to control the (first) light source, and the (optional) second light source. This may allow controlling the correlated color temperature and/or the color rendering index, and/or the color point of the device light. Hence, in specific embodiments the light generating device may further comprise a control system, wherein the control system is configured to control one or more of the correlated color temperature and the color rendering index of the device light by controlling the light source and the second light source.

The term "white light" herein, is known to the person skilled in the art. It especially relates to light having a correlated color temperature (CCT) between about 1800 K and 20000 K, such as between 2000 and 20000 K, especially 2700-20000 K, for general lighting especially in the range of about 2700 K and 6500 K.

The terms "light" and "radiation" are herein interchangeably used, unless clear from the context that the term "light" only refers to visible light. The terms "light" and "radiation" may thus refer to UV radiation, visible light, and IR radiation. In specific embodiments, especially for lighting applications, the terms "light" and "radiation" refer to visible light.

It may be desirable to (further) shape the device light into a beam of device light. Alternatively or additionally, it may be desirable to (further) homogenize the device light (into homogenized device light). To this end, an optical element may be used. Hence, in embodiments the light generating device may further comprise an optical element configured to beam shape the device light and/or configured to homogenize the device light. Especially, the optical element is configured downstream of the luminescent material. Further, the optical element is configured downstream from one or more light source and downstream of the second light source. The optical element may especially comprise a collimator used to convert (to "collimate") the light beam into a beam having a desired angular distribution. Further, the optical element especially comprises a light transmissive body comprising the radiation entrance window. Hence, the optical element may be a body of light transmissive material that is configured to collimate the converter radiation from the luminescent body. In specific embodiments, the optical element comprises a compound parabolic like collimator, such as a CPC (compound parabolic concentrator). A massive collimator, such as a massive CPC, may especially be used as extractor of light and to collimate the (emission) radiation. Alternatively, one may also comprise a dome with optical contact (n>1.00) on the nose of the rod or a hollow collimator, such as a CPC, to concentrate the (emission) radiation.

The term "optical element" may also refer to a plurality of (different) optical elements.

Below, some further embodiments are described.

The first face and an edge face, as well a second face and an edge face may be configured essentially perpendicular, respectively.

The body may have light guiding or wave guiding properties (due to the relative high transmission for luminescent material light (and optionally for the light source light). The transmission of the body for luminescence wavelengths may be at least 80%/cm, such as at least 90%/cm, even more especially at least 95%/cm, such as at least 98%/cm, such as at least 99%/cm. This implies that e.g. a 1 cm³ cubic shaped piece of light transmissive body, under perpendicular irradiation of radiation having a selected luminescence wavelength (such as a wavelength corresponding to an emission maximum of the luminescence of the luminescent material of the light transmissive body), will have a transmission of at least 95%. Hence, the luminescent body is herein also indicated "light transmissive body", as this body is light transmissive for the luminescent material light. Herein, values for transmission especially refer to transmission without taking into account Fresnel losses at interfaces (with e.g. air). Hence, the term "transmission" especially refers to the internal transmission. The internal transmission may e.g. be determined by measuring the transmission of two or more bodies having a different width over which the transmission is measured. Then, based on such measurements the contribution of Fresnel reflection losses and (consequently) the internal transmission can be determined. Hence, especially, the values for transmission indicated herein, disregard Fresnel losses. In embodiments, an anti-reflection coating may be applied to the luminescent body, such as to suppress Fresnel reflection losses (during the light incoupling process).

The transmission can be determined by providing light at a specific wavelength with a first intensity to the light transmissive body under perpendicular radiation and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

In embodiments, in an operational mode of the light generating device, the light generating device is configured to generate the luminescent material light from a radiation exit surface (or radiation exit face) of the device with a power density of at least 4 W/mm².

In yet further specific embodiments, the thermally conductive material consists of alumina, the luminescent body is a ceramic body, wherein the height (H) is selected from the range of 50-190 µm, the luminescent body comprises 5-40 wt% of the thermally conductive material and 60-95 wt% of the luminescent material relative to the total weight of the luminescent body, and Ce is available with 0.4-1 % relative to the A.

In yet a further aspect, the invention also provides a lamp or a luminaire comprising the light generating device as defined herein. The luminaire may further comprise a housing, optical elements, louvres, etc. etc... In yet a further aspect, the invention also provides a projection device comprising the light generating device as defined herein. Especially, a projection device or "projector" or "image projector" may be an optical device that projects an image (or moving images) onto a surface, such as e.g. a projection screen. The projection device may include one or more light generating devices such as described herein.

The lighting device (or luminaire) may be part of or may be applied in e.g. office lighting systems, household application systems, shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, decorative lighting systems, portable systems, automotive applications, (outdoor) road lighting systems, urban lighting systems, green house lighting systems, horticulture lighting, digital projection, or LCD backlighting, etc.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1b schematically depict some aspects;
Figs. 2a-2b schematically depict some embodiments;
Figs. 3a-3b schematically depict some further aspects; and
Fig. 4 schematically depicts some applications. The schematic drawings are not necessarily to scale.

### DETAILED DESCRIPTION OF THE EMBODIMENTS

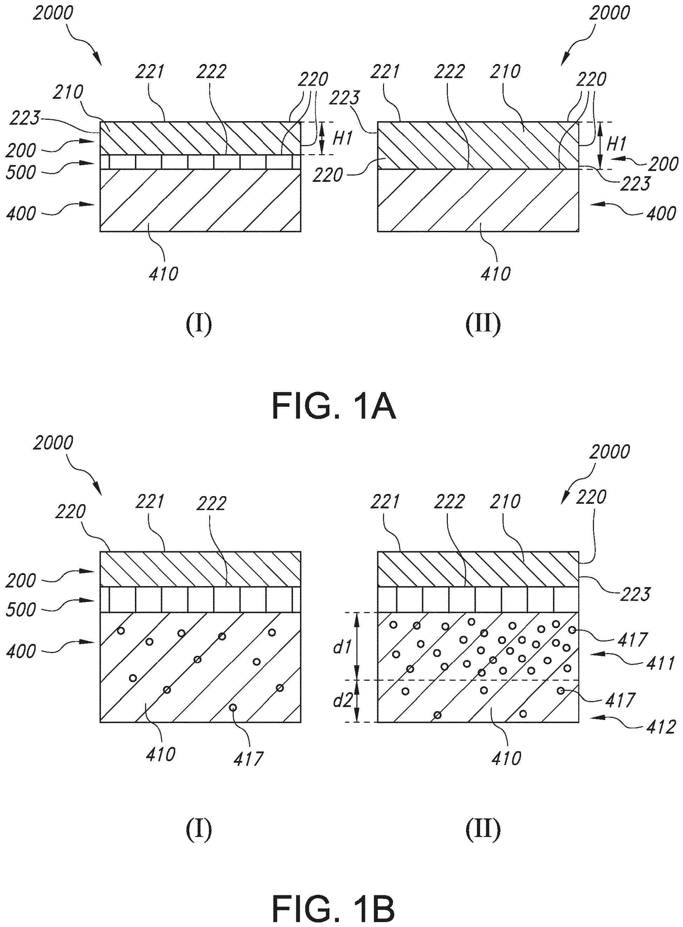

Fig. 1a schematically depicts some embodiments of an assembly 2000 comprising a luminescent body 200, a thermally conductive element 400, and an optional coating layer 500. Variant I comprises such coating layer 500 and by way of example, variant II does not comprise such coating layer. The luminescent body 200 comprises a luminescent material 210. Especially, the luminescent body 200 comprises a ceramic luminescent body. The luminescent body 200 comprises an external surface 220, i.e. the outer faces or surface. The luminescent body 200 may have a first face 221 and a second face 222, which may define a height H1. Reference 223 indicates a side face. There may be one or more side faces 223, like one side face 223 in the case of a disc-like luminescent body 200 and four side faces 223 in the case of a cubic or bar-like or plate-like luminescent body 200. The second face 222 is directed to the thermally conductive element 400. The thermally conductive element 400 comprises metal material 410. Especially, at least 25% of the external surface 220 is in thermal contact with the thermally conductive element 400. Further, as shown in variant I the coating layer 500 may be configured between the luminescent body 200 and the thermally conductive element 400.

As schematically depicted, the (optional) coating layer 500 and the thermally conductive element 400 are conformal to the luminescent body 200.

Especially, in embodiments (see e.g. also Fig. 3), the thermally conductive element 400 comprises supersonic particle deposited metal material 410.

In embodiments, 25-95% of the external surface 220 is surrounded by the thermally conductive element 400.

Fig. 1b schematically also depict some variants. Here the aspect of the possible porosity of the thermally conductive element 400 or thermally conductive body is shown with two possible variants. The variant I may have an essentially homogeneous distribution of the porosity; variant II may have an inhomogeneous distribution of the porosity, leading in this variant to two layers.

In embodiments, the supersonic particle deposited metal material 410 has a porosity selected from the range of 10-20%. The pores are very schematically indicated. Reference 417 refers to the pores.

Referring to variant II in Fig. 1b, the thermally conductive element 400 may comprise a multilayer comprising the metal material 410. A first layer 411 of the multilayer 410 may have a first thickness d1 and a first porosity p1. A second layer 412 of the multilayer 410 may have a second thickness d2 and a second porosity p2. In embodiments, the first layer 411 may be configured closer to the luminescent body 200 than the second layer 412. In embodiments, d1≥ 1 mm and/or d2≥ 1 mm. Further, in specific embodiments p1<p2.

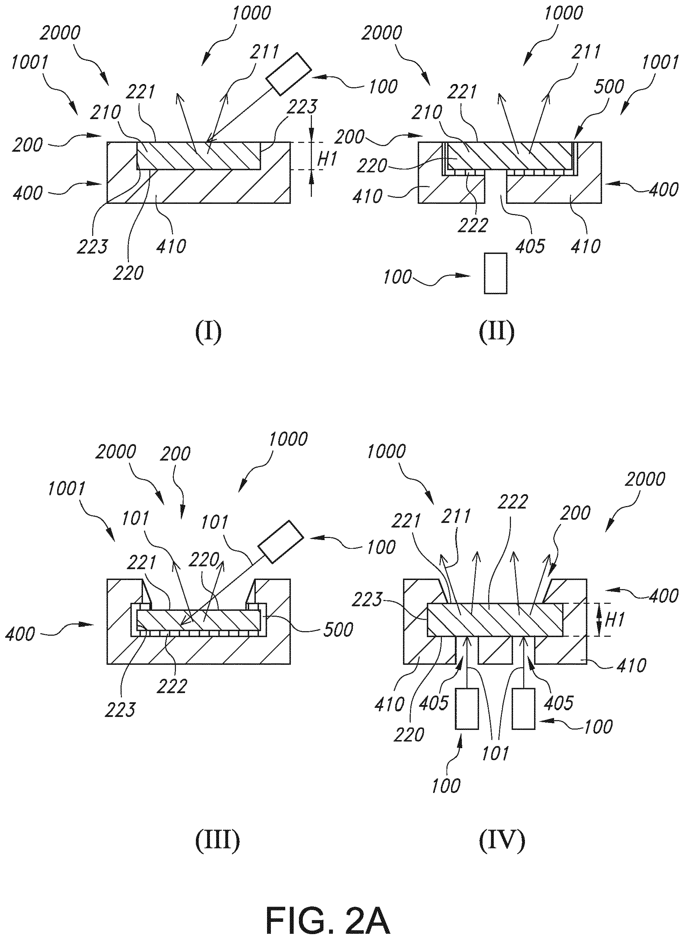

Fig. 2a schematically depict some variants wherein more than 50% and up to 95% of the external surface 220 is surrounded by the thermally conductive element 400.

In embodiments, the luminescent body 200 has a first volume V1, wherein the thermally conductive element 400 has a second volume V2, wherein V2≥2^{∗}V1, especially wherein V2≥10^{∗}V1.

As indicated above, the luminescent body 200 has a first face 221 and a second face 222, wherein the first face 221 and the second face 222 define a height H1 of the luminescent body 200.

In variant I in Fig. 2a, the entire second face 222 is directed to the thermally conductive element 400 and the entire first face 221 is not directed to the thermally conductive element 400. In variant II in Fig. 2a, the entire second face 222 is directed to the thermally conductive element 400, except for one or more pinholes 405, and the entire first face 221 is not directed to the thermally conductive element 400. In variant III in Fig. 2a, the entire second face 222 is directed to the thermally conductive element 400 and part of the entire first face 221 is directed to the thermally conductive element 400. In variant IV in Fig. 2a, the entire second face 222 is directed to the thermally conductive element 400, except for one or more pinholes 405, and part of the entire first face 221 is directed to the thermally conductive element 400.

Fig. 2a also shows an embodiment of a light generating device 1000, comprising the assembly 2000 and a light source 100, configured to generate light source light 101, which can at least partly converted into luminescent material light 211. Such light generating device 1000 may provide device light 1001 comprising at least the luminescent material light 211 and optionally the light source light 101. Hence, Fig. 2a schematically depict embodiments of the assembly 2000, further comprising a light source 100 configured to generate light source light 101. Especially, the light source 100 comprises a laser light source, such as a laser diode, thought the light source 100 may also be an LED. The light source 100 is configured to irradiate with the light source light 101 the luminescent body 200, wherein the luminescent material 210 is configured to convert at least part of the light source light 101 into luminescent material light 211. In specific embodiments the luminescent material 210 comprises a luminescent material of the type A₃BsO₁₂:Ce, wherein A comprises one or more of Y, La, Gd, Tb and Lu, and wherein B comprises one or more of Al, Ga, In and Sc. The light source light 101 may be provided in embodiments via a pinhole 405. By way of example, variant IV comprises more than one pinhole 405. Further, by way of example some variants include a coating layer 500 and some do not. Especially, however, in general the coating layer 500 may be applied.

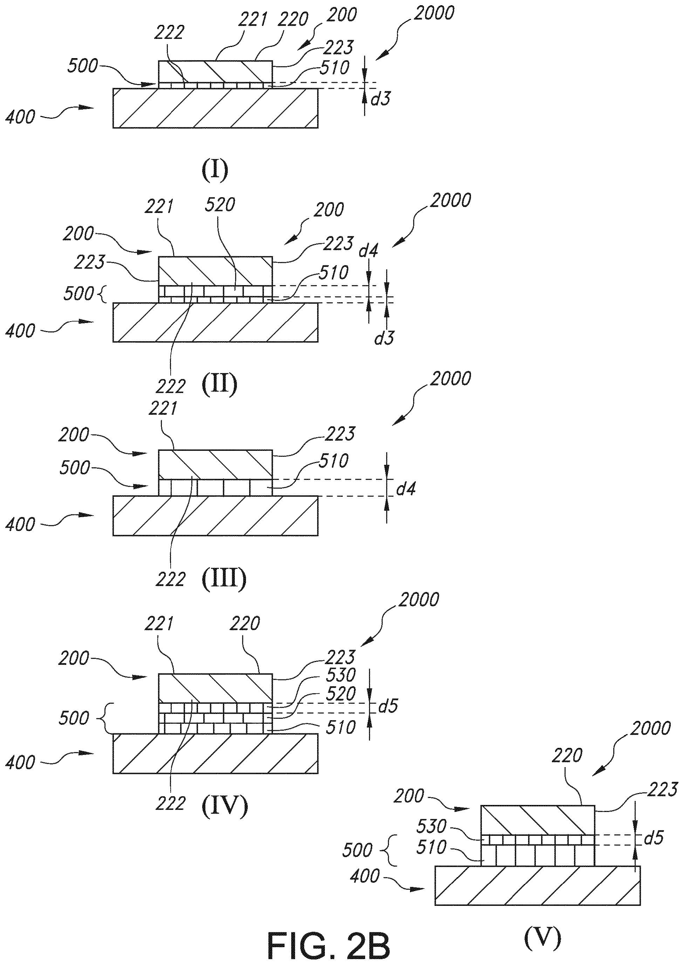

Fig. 2b schematically depict some embodiments of the coating layer.

In variant I of Fig. 2b, the coating layer 500 may comprise a reflective layer 510. The reflective layer 510 may comprise one or more of aluminum and silver. Especially, the reflective layer 510 is in contact with the luminescent body 200. In embodiments, the reflective layer 510 may have a reflection of at least 50% (especially at least 80%) under perpendicular radiation for one or more wavelengths selected from one or more of the UV wavelength range and the visible wavelength range. The reflective layer 510 may have a thickness d3.

In variant II of Fig. 2b, the coating layer 500 comprises reflective layer 510 and a protective layer 520. The protective layer may e.g. be aluminum (or silver). The thickness d4 may be selected from the range of 1-1000 µm, or smaller.

Hence, when using a relatively thick reflective layer 510, one may effectively obtain a protective layer having reflective properties. In variant III of Fig. 2b, the coating layer 500 may comprise a relatively thick reflective layer 510, such as having a thickness d3,d4 selected from the range of 1-1000 µm. The reflective layer 510 may e.g. comprise Al.

In variant IV of Fig. 2b, the coating layer 500 comprises an adhesion layer 530. The adhesion layer 530 may facilitate adhesion of the SPD layer 400. In embodiments, the adhesion layer 530 may comprises chromium. In embodiments, the adhesion layer 530 is in contact with the thermally conductive element 400. Further, in embodiments the adhesion layer has an adhesion layer thickness d5 selected e.g. from the range of 50-1000 nm.

In variant VI of Fig. 2b, the adhesion layer 510 is directly deposited on the (thick) reflective layer 510.

Fig. 3a schematically depicts an embodiment of a method for producing an assembly 2000 comprising a luminescent body 200, a thermally conductive element 400, and a coating layer. For the sake of clarity, the coating layer is not depicted, but such coating layer may be configured between the luminescent body and the thermally conductive element 400. Hence, such coating may be provided after the second stage in the drawing and before the third stage in the drawing. As indicated above, the coating layer may e.g. be provided by one or more of CVD and PVD, especially PVD. Further, the coating layer may comprise in embodiments a multi-layer, of which the two or more layers may be provided with independently selected deposition methods.

The method may comprise: (i) providing a mold 600 and the luminescent body 200 and configuring the latter in the right position, and (ii) a deposition stage (see also below). Hence, the method may comprise providing the luminescent body 200 comprising a luminescent material 210, wherein the luminescent body 200 comprises an external surface 220. Further, the method may comprise a deposition stage comprising (a) optionally providing the coating layer to part of the external surface 220, and (b) providing the thermally conductive element 400 comprising metal material 410 to the coating layer 500 (on the luminescent body 200)or to the luminescent body 200 by supersonic particle deposition.

In embodiments, the method may further comprise (a) providing the coating layer 500 to 25-95% of the external surface 220 by providing one or more of (ai) a reflective layer 510, wherein the reflective layer 510 comprises one or more of aluminum and silver, and wherein the reflective layer 510 is provided by (vapor) deposition of the reflective layer 510 on the external surface 220 (of the luminescent body 200); (aii) an adhesion layer 530, wherein the adhesion layer 530 comprises chromium, and wherein the adhesion layer 530 is provided by (vapor) deposition, and wherein the thermally conductive element 400 (comprising metal material 410) is provided on the adhesion layer 530 by supersonic particle deposition.

The coating layer 500 (and also the thermally conductive element 400) may cover 25-95 of the external surface 220, especially 40-90%, such as 50-85%, even more especially 60-80%. The higher the coverage, the better for thermal management. Further, a too high coverage may not be good for the efficiency, as luminescent light may less easily couple out from the luminescent body. Further, the area that can be irradiated should also not be too small.

As schematically depicted in Fig. 3a, the method may thus (also) comprise (a) shielding part of the external surface 220 (of the luminescent body 200) with a mold element 600 while leaving part of the external surface 220 accessible; (b) executing the deposition stage; and (c) removing the mold element 600.

In Fig. 3a also the assembly 2000 as produced is shown. It is also effectively shown that a mold 600 was chosen allowing to provide one or more of a support for the light source and a beam dump. Hence, a variant is shown wherein the thermally conductive element 400 comprises a first protruding part 450 configured as beam dump for part of the light source light 101. Fig. 3a also schematically depicts an embodiment of a second protruding part 460, which may especially be a sloped part. Hence, in embodiments the light source maybe configured such that an optical axis of the light source light is under an angle with a face, here the first face of the luminescent body selected from the range of e.g. larger than 30° but smaller than 90°.

Fig. 3b schematically depict an embodiment with two light sources. Especially, they may be configured to generate light source light 101 having different spectral power distributions.

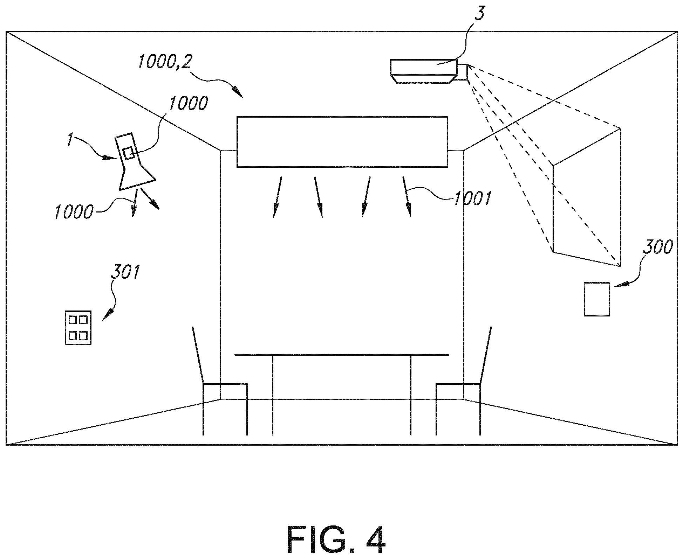

Fig. 4 schematically depicts an embodiment of a luminaire 2 comprising the light generating device 1000 as described above. Reference 301 indicates a user interface which may be functionally coupled with the control system (not depicted) comprised by or functionally coupled to the lighting system 1000. Fig. 4 also schematically depicts an embodiment of lamp 1 comprising the light generating device 1000. Reference 3 indicates a projector device or projector system, which may be used to project images, such as at a wall.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

Therefore, amongst others the invention provides in embodiments a luminescent material body, especially having the shape of a tile, a reflective layer attached to part of the luminescent body, an adhesion layer attached to the reflective layer, and a heatsink attached to the adhesion layer, wherein the heatsink is SPD made. Instead of the term "SPD" also the term "SPC", supersonic powder coating, may be applied.

## Claims

1. An assembly (2000) comprising a luminescent body (200), a thermally conductive element (400), and a coating layer (500), wherein:
- the luminescent body (200) comprises a luminescent material (210), wherein the luminescent body (200) comprises a ceramic luminescent body, and wherein the luminescent body (200) comprises an external surface (220);
- the thermally conductive element (400) comprises metal material (410);
- at least 25% of the external surface (220) is in thermal contact with the thermally conductive element (400);
- wherein the coating layer (500) is configured between the luminescent body (200) and the thermally conductive element (400);
- wherein the coating layer (500) and the thermally conductive element (400) are conformal to the luminescent body (200);
- wherein the thermally conductive element (400) comprises supersonic particle deposited metal material (410);
- wherein 25-95% of the external surface (220) is surrounded by the thermally conductive element (400);
- wherein the supersonic particle deposited metal material (410) has a porosity selected from the range of 5-30%.

2. The assembly (2000) according to claim 1, wherein the supersonic particle deposited metal material (410) has a porosity selected from the range of 5-20%.

3. The assembly (2000) according to claim 1, wherein the thermally conductive element (400) may comprise a multilayer comprising the metal material, wherein a first layer of the multilayer has a first thickness (d1) and a first porosity (p1), wherein a second layer of the multilayer has a second thickness (d2) and a second porosity (p2), wherein the first layer is configured closer to the luminescent body than the second layer, and wherein p1<p2 or p2<p1.

4. The assembly (2000) according to any one of the preceding claims, wherein thermally conductive element (400) comprises a multilayer comprising the metal material (410), wherein a first layer (411) of the multilayer (410) has a first thickness (d1) and a first porosity p1, wherein a second layer (412) of the multilayer (410) has a second thickness (d2) and a second porosity p2, wherein the first layer (411) is configured closer to the luminescent body (200) than the second layer (412), wherein d1<d2 and wherein p1<p2.

5. The assembly (2000) according to any one of the preceding claims, wherein the luminescent body (200) comprises a luminescent ceramic body, and wherein more than 50% and up to 95% of the external surface (220) is surrounded by the thermally conductive element (400).

6. The assembly (2000) according to any one of the preceding claims, wherein the luminescent body (200) has a first volume V1, wherein the thermally conductive element (400) has a second volume V2, wherein V2≥10^{∗}V1.

7. The assembly (2000) according to any one of the preceding claims, wherein the luminescent body (200) has a first face (221) and a second face (222), wherein the first face (221) and the second face (222) define a height (H1) of the luminescent body (200), wherein:
- the entire second face (222) is directed to the thermally conductive element (400) and the entire first face (221) is not directed to the thermally conductive element (400); or
- the entire second face (222) is directed to the thermally conductive element (400), except for one or more pinholes (405), and the entire first face (221) is not directed to the thermally conductive element (400); or
- the entire second face (222) is directed to the thermally conductive element (400) and part of the entire first face (221) is directed to the thermally conductive element (400); or
- the entire second face (222) is directed to the thermally conductive element (400), except for one or more pinholes (405), and part of the entire first face (221) is directed to the thermally conductive element (400).

8. The assembly (2000) according to any one of the preceding claims, wherein the coating layer (500) comprises a reflective layer (510), wherein the reflective layer (510) is in contact with the luminescent body (200), and wherein the reflective layer (510) has a reflection of at least 80% under perpendicular radiation for one or more wavelengths selected from one or more of the UV wavelength range and the visible wavelength range.

9. The assembly (2000) according to claim 8, wherein the coating layer (500) has a thickness (d3,d4) selected from the range of 1-1000 µm.

10. The assembly (2000) according to any one of the preceding claims 8-9, wherein the coating layer (500) comprises an adhesion layer (530), wherein the adhesion layer (530) is in contact with the thermally conductive element (400).

11. The assembly (2000) according to any one of the preceding claims, further comprising a light source (100) configured to generate light source light (101), wherein the light source (100) comprises a laser light source (10), wherein the light source (100) is configured to irradiate with the light source light (101) the luminescent body (200), wherein the luminescent material (210) is configured to convert at least part of the light source light (101) into luminescent material light (211); and wherein the luminescent material (210) comprises a luminescent material of the type A₃BsO₁₂:Ce, wherein A comprises one or more of Y, La, Gd, Tb and Lu, and wherein B comprises one or more of Al, Ga, In and Sc.

12. The assembly (2000) according to claim 11, wherein the thermally conductive element (400) comprises one or more of (i) a first protruding part (450) configured as beam dump for part of the light source light (101), and (ii) a second protruding part (460) configured as light source support.

13. A method for producing an assembly (2000) comprising a luminescent body (200), a thermally conductive element (400), and a coating layer (500), wherein the method comprises:
- providing the luminescent body (200) comprising a luminescent material (210), wherein the luminescent body (200) comprises an external surface (220);
- a deposition stage comprising:
- providing the coating layer (500) to part of the external surface (220);
- providing the thermally conductive element (400) comprising metal material (410) to the coating layer (500) by supersonic particle deposition.

14. The method according to claim 13, comprising:
- shielding part of the external surface (220) with a mold element (600) while leaving part of the external surface (220) accessible;
- executing the deposition stage; and
- removing the mold element (600).

15. A lamp (1) or a luminaire (2) or a projector system (3) comprising the assembly (1000) according to any one of the preceding claims 1-12 or obtainable according to any one of the preceding claims 13-14.

## Patentansprüche

1. Anordnung (2000), umfassend einen lumineszierenden Körper (200), ein wärmeleitendes Element (400) und eine Beschichtungsschicht (500), wobei:
- der lumineszierende Körper (200) ein lumineszierendes Material (210) umfasst, wobei der lumineszierende Körper (200) einen lumineszierenden Körper aus Keramik umfasst, und wobei der lumineszierende Körper (200) eine Außenoberfläche (220) umfasst;
- das wärmeleitende Element (400) Metallmaterial (410) umfasst;
- mindestens 25 % der Außenoberfläche (220) in Wärmekontakt mit dem wärmeleitenden Element (400) ist;
- wobei die Beschichtungsschicht (500) zwischen dem lumineszierenden Körper (200) und dem wärmeleitenden Element (400) konfiguriert ist;
- wobei die Beschichtungsschicht (500) und das wärmeleitende Element (400) zu dem lumineszierenden Körper (200) konform sind;
- wobei das wärmeleitende Element (400) Metallmaterial (410) mit mit Überschall abgeschiedenen Partikeln umfasst;
- wobei 25-95 % der Außenoberfläche (220) von dem wärmeleitenden Element (400) umgeben ist;
- wobei das Metallmaterial (410) mit mit Überschall abgeschiedenen Partikeln eine Porosität aufweist, die aus dem Bereich von 5-30 % ausgewählt ist.

2. Anordnung (2000) nach Anspruch 1, wobei das Metallmaterial (410) mit mit Überschall abgeschiedenen Partikeln eine Porosität aufweist, die aus dem Bereich von 5-20 % ausgewählt ist.

3. Anordnung (2000) nach Anspruch 1, wobei das wärmeleitende Element (400) eine Mehrfachschicht umfassen kann, umfassend das Metallmaterial, wobei eine erste Schicht der Mehrfachschicht eine erste Dicke (d1) und eine erste Porosität (p1) aufweist, wobei eine zweite Schicht der Mehrfachschicht eine zweite Dicke (d2) und eine zweite Porosität (p2) aufweist, wobei die erste Schicht näher an dem lumineszierenden Körper als die zweite Schicht konfiguriert ist, und wobei p1<p2 oder p2<p1.

4. Anordnung (2000) nach einem der vorstehenden Ansprüche, wobei das wärmeleitende Element (400) eine Mehrfachschicht umfasst, umfassend das Metallmaterial (410), wobei eine erste Schicht (411) der Mehrfachschicht (410) eine erste Dicke (d1) und eine erste Porosität p1 aufweist, wobei eine zweite Schicht (412) der Mehrfachschicht (410) eine zweite Dicke (d2) und eine zweite Porosität p2 aufweist, wobei die erste Schicht (411) näher an dem lumineszierenden Körper (200) als die zweite Schicht (412) konfiguriert ist, wobei d1<d2, und wobei p1<p2.

5. Anordnung (2000) nach einem der vorstehenden Ansprüche, wobei der lumineszierende Körper (200) einen lumineszierenden Körper aus Keramik umfasst, und wobei über 50 % und bis zu 95 % der Außenoberfläche (220) von dem wärmeleitenden Element (400) umgeben ist.

6. Anordnung (2000) nach einem der vorstehenden Ansprüche, wobei der lumineszierende Körper (200) ein erstes Volumen V1 aufweist, wobei das wärmeleitende Element (400) ein zweites Volumen V2 aufweist, wobei V2≥10*V1.

7. Anordnung (2000) nach einem der vorstehenden Ansprüche, wobei der lumineszierende Körper (200) eine erste Fläche (221) und eine zweite Fläche (222) aufweist, wobei die erste Fläche (221) und die zweite Fläche (222) eine Höhe (H1) des lumineszierenden Körpers (200) definieren, wobei:
- die gesamte zweite Fläche (222) auf das wärmeleitende Element (400) gerichtet ist, und die gesamte erste Fläche (221) nicht auf das wärmeleitende Element (400) gerichtet ist; oder
- die gesamte zweite Fläche (222) auf das wärmeleitende Element (400) gerichtet ist, mit Ausnahme eines oder mehrerer Sehlöcher (405), und die gesamte erste Fläche (221) nicht auf das wärmeleitende Element (400) gerichtet ist; oder
- die gesamte zweite Fläche (222) auf das wärmeleitende Element (400) gerichtet ist, und ein Teil der gesamten ersten Fläche (221) auf das wärmeleitende Element (400) gerichtet ist; oder
die gesamte zweite Fläche (222) auf das wärmeleitende Element (400) gerichtet ist, mit Ausnahme eines oder mehrerer Sehlöcher (405), und ein Teil der gesamten ersten Fläche (221) auf das wärmeleitende Element (400) gerichtet ist.

8. Anordnung (2000) nach einem der vorstehenden Ansprüche, wobei die Beschichtungsschicht (500) eine reflektierende Schicht (510) umfasst, wobei die reflektierende Schicht (510) mit dem lumineszierenden Körper (200) in Kontakt ist, und wobei die reflektierende Schicht (510) eine Reflexion von mindestens 80 % unter senkrechter Strahlung für eine oder mehrere Wellenlängen aufweist, die aus einem oder mehreren des UV-Wellenlängenbereichs und des sichtbaren Wellenlängenbereichs ausgewählt sind.

9. Anordnung (2000) nach Anspruch 8, wobei die Beschichtungsschicht (500) eine Dicke (d3, d4) aufweist, die aus dem Bereich von 1-1000 µm ausgewählt ist.

10. Anordnung (2000) nach einem der vorstehenden Ansprüche 8 bis 9, wobei die Beschichtungsschicht (500) eine Klebstoffschicht (530) umfasst, wobei die Klebstoffschicht (530) mit dem wärmeleitenden Element (400) in Kontakt ist.

11. Anordnung (2000) nach einem der vorstehenden Ansprüche, ferner umfassend eine Lichtquelle (100), die konfiguriert ist, um Lichtquellenlicht (101) zu erzeugen, wobei die Lichtquelle (100) eine Laserlichtquelle (10) umfasst, wobei die Lichtquelle (100) konfiguriert ist, um mit dem Lichtquellenlicht (101) den lumineszierenden Körper (200) zu bestrahlen, wobei das lumineszierende Material (210) konfiguriert ist, um mindestens einen Teil des Lichtquellenlichts (101) in Licht des lumineszierenden Materials (211) umzuwandeln; und wobei das lumineszierende Material (210) ein lumineszierendes Material von der Art A₃B₅O₁₂:Ce, umfasst, wobei A eines oder mehrere von Y, La, Gd, Tb und Lu umfasst, und wobei B eines oder mehrere von Al, Ga, In und Sc umfasst.

12. Anordnung (2000) nach Anspruch 11, wobei das wärmeleitende Element (400) einen oder mehrere von (i) einem ersten vorstehenden Teil (450), der als Lichtfalle für einen Teil des Lichtquellenlichts (101) konfiguriert ist, und (ii) einen zweiten vorstehenden Teil (460), der als Lichtquellenträger konfiguriert ist, umfasst.

13. Verfahren zum Herstellen einer Anordnung (2000), umfassend einen lumineszierenden Körper (200), ein wärmeleitendes Element (400) und eine Beschichtungsschicht (500), wobei das Verfahren umfasst:
- Bereitstellen des lumineszierenden Körpers (200), umfassend ein lumineszierendes Material (210), wobei der lumineszierende Körper (200) eine Außenoberfläche (220) umfasst;
- eine Abscheidungsstufe, umfassend:
- Bereitstellen der Beschichtungsschicht (500) an einen Teil der Außenoberfläche (220);
- Bereitstellen des wärmeleitenden Elements (400), umfassend Metallmaterial (410), an die Beschichtungsschicht (500) durch Partikelabscheidung mit Überschall.

14. Verfahren nach Anspruch 13, umfassend:
- Abschirmen eines Teils der Außenoberfläche (220) mit einem Formelement (600), während ein Teil der Außenoberfläche (220) zugänglich bleibt;
- Ausführen der Abscheidungsstufe und
- Entfernen des Formelements (600).

15. Lampe (1) oder Leuchte (2) oder Projektorsystem (3), umfassend die Anordnung (1000) nach einem der vorstehenden Ansprüche 1 bis 12 oder erhältlich nach einem der vorstehenden Ansprüche 13 bis 14.

## Revendications

1. Ensemble (2000) comprenant un corps luminescent (200), un élément thermoconducteur (400), et une couche de revêtement (500), dans lequel :
- le corps luminescent (200) comprend un matériau luminescent (210), le corps luminescent (200) comprenant un corps luminescent en céramique, et le corps luminescent (200) comprenant une surface externe (220) ;
- l'élément thermoconducteur (400) comprend un matériau métallique (410) ;
- au moins 25 % de la surface externe (220) est en contact thermique avec l'élément thermoconducteur (400) ;
- dans lequel la couche de revêtement (500) est conçue entre le corps luminescent (200) et l'élément thermoconducteur (400) ;
- dans lequel la couche de revêtement (500) et l'élément thermoconducteur (400) épousent la forme du corps luminescent (200) ;
- dans lequel l'élément thermoconducteur (400) comprend un matériau métallique déposé par particules supersoniques (410) ;
- dans lequel 25 à 95 % de la surface externe (220) est entourée par l'élément thermoconducteur (400) ;
- dans lequel le matériau métallique déposé par particules supersoniques (410) a une porosité choisie dans la plage de 5 à 30 %.

2. Ensemble (2000) selon la revendication 1, dans lequel le matériau métallique déposé par particules supersoniques (410) a une porosité choisie dans la plage de 5 à 20 %.

3. Ensemble (2000) selon la revendication 1, dans lequel l'élément thermoconducteur (400) peut comprendre une multicouche comprenant le matériau métallique, dans lequel une première couche de la multicouche a une première épaisseur (d1) et une première porosité (p1), dans lequel une seconde couche de la multicouche a une seconde épaisseur (d2) et une seconde porosité (p2), dans lequel la première couche est conçue plus près du corps luminescent que la seconde couche, et dans lequel p1<p2 ou p2<p1.

4. Ensemble (2000) selon l'une quelconque des revendications précédentes, dans lequel l'élément thermoconducteur (400) comprend une multicouche comprenant le matériau métallique (410), une première couche (411) de la multicouche (410) ayant une première épaisseur (d1) et une première porosité p1, une seconde couche (412) de la multicouche (410) ayant une seconde épaisseur (d2) et une seconde porosité p2, la première couche (411) étant conçue plus près du corps luminescent (200) que la seconde couche (412), dans lequel d1<d2 et dans lequel p1<p2.

5. Ensemble (2000) selon l'une quelconque des revendications précédentes, dans lequel le corps luminescent (200) comprend un corps en céramique luminescent, et dans lequel plus de 50 % et jusqu'à 95 % de la surface externe (220) est entourée par l'élément thermoconducteur (400).

6. Ensemble (2000) selon l'une quelconque des revendications précédentes, dans lequel le corps luminescent (200) a un premier volume V1, dans lequel l'élément thermoconducteur (400) a un second volume V2, dans lequel V2>10*V1.

7. Ensemble (2000) selon l'une quelconque des revendications précédentes, dans lequel le corps luminescent (200) a une première face (221) et une seconde face (222), la première face (221) et la seconde face (222) définissant une hauteur (H1) du corps luminescent (200), dans lequel :
- la seconde face entière (222) est dirigée vers l'élément thermoconducteur (400) et la première face entière (221) n'est pas dirigée vers l'élément thermoconducteur (400) ; ou
- la seconde face entière (222) est dirigée vers l'élément thermoconducteur (400), à l'exception d'un ou plusieurs trous d'épingle (405), et la première face entière (221) n'est pas dirigée vers l'élément thermoconducteur (400) ; ou
- la seconde face entière (222) est dirigée vers l'élément thermoconducteur (400) et une partie de la première face entière (221) est dirigée vers l'élément thermoconducteur (400) ; ou
- la seconde face entière (222) est dirigée vers l'élément thermoconducteur (400), à l'exception d'un ou plusieurs trous d'épingle (405), et une partie de la première face entière (221) est dirigée vers l'élément thermoconducteur (400).

8. Ensemble (2000) selon l'une quelconque des revendications précédentes, dans lequel la couche de revêtement (500) comprend une couche réfléchissante (510), la couche réfléchissante (510) étant en contact avec le corps luminescent (200), et la couche réfléchissante (510) ayant une réflexion d'au moins 80 % sous un rayonnement perpendiculaire pour une ou plusieurs longueurs d'onde choisies parmi une ou plusieurs parmi la plage de longueur d'onde UV et la plage de longueur d'onde visible.

9. Ensemble (2000) selon la revendication 8, dans lequel la couche de revêtement (500) a une épaisseur (d3, d4) choisie dans la plage de 1 à 1000 µm.

10. Ensemble (2000) selon l'une quelconque des revendications 8 à 9 précédentes, dans lequel la couche de revêtement (500) comprend une couche d'adhésion (530), la couche d'adhésion (530) étant en contact avec l'élément thermoconducteur (400).

11. Ensemble (2000) selon l'une quelconque des revendications précédentes, comprenant en outre une source de lumière (100) conçue pour générer de la lumière de source de lumière (101), la source de lumière (100) comprenant une source de lumière laser (10), la source de lumière (100) étant conçue pour irradier avec la lumière de source de lumière (101) le corps luminescent (200), le matériau luminescent (210) étant conçu pour convertir au moins une partie de la lumière de source de lumière (101) en lumière de matériau luminescent (211) ; et le matériau luminescent (210) comprenant un matériau luminescent du type A₃B₅O_{12;}Ce, A comprenant un ou plusieurs parmi Y, La, Gd, Tb et Lu, et B comprenant un ou plusieurs parmi Al, Ga, In et Sc.

12. Ensemble (2000) selon la revendication 11, dans lequel l'élément thermoconducteur (400) comprend une ou plusieurs parmi (i) une première partie saillante (450) conçue en tant que décharge de faisceau pour une partie de la lumière de source de lumière (101), et (ii) une seconde partie saillante (460) conçue en tant que support de source de lumière.

13. Procédé permettant de produire un ensemble (2000) comprenant un corps luminescent (200), un élément thermoconducteur (400) et une couche de revêtement (500), le procédé comprenant :
- la fourniture du corps luminescent (200) comprenant un matériau luminescent (210), le corps luminescent (200) comprenant une surface externe (220) ;
- une phase de dépôt comprenant :
- la fourniture de la couche de revêtement (500) à une partie de la surface externe (220) ;
- la fourniture de l'élément thermoconducteur (400) comprenant un matériau métallique (410) à la couche de revêtement (500) par dépôt de particules supersoniques.

14. Procédé selon la revendication 13, comprenant :
- la protection d'une partie de la surface externe (220) avec un élément de moule (600) tout en laissant une partie de la surface externe (220) accessible ;
- l'exécution de la phase de dépôt : et
- le retrait de l'élément de moule (600).

15. Lampe (1) ou luminaire (2) ou système de projecteur (3) comprenant l'ensemble (1000) selon l'une quelconque des revendications 1 à 12 précédentes ou pouvant être obtenu selon l'une quelconque des revendications 13 à 14 précédentes.
